# EUROPEAN PATENT SPECIFICATION

(11) **EP 4 202 599 B1**
(45) Date of publication and mention of the grant of the patent: **11.03.2026**
(21) Application number: 22834462.8
(22) Date of filing: 08.11.2022
(51) Int. Cl.: G06F 1/16, G06F 3/01, G05B 19/04, H04M 1/02

(54) **ELECTRONIC DEVICE COMPRISING FLEXIBLE DISPLAY AND DRIVING METHOD**
ELEKTRONISCHE VORRICHTUNG MIT FLEXIBLER ANZEIGE UND ANSTEUERUNGSVERFAHREN
DISPOSITIF ÉLECTRONIQUE COMPRENANT UN DISPOSITIF D'AFFICHAGE FLEXIBLE ET PROCÉDÉ DE COMMANDE

(30) Priority: 12.11.2021 KR 20210155475; 23.12.2021 KR 20210185902
(43) Date of publication of application: 28.06.2023
(73) Proprietor: Samsung Electronics Co., Ltd., Gyeonggi-do 16677 (KR)
(72) Inventor: EOM, Kihun, Suwon-si, Gyeonggi-do 16677 (KR); OH, Sejeong, Suwon-si, Gyeonggi-do 16677 (KR)
(74) Representative: Gulde & Partner
(86) International application number: PCT/KR2022/017388
(87) International publication number: WO 2023/085712

(56) References cited:
- WO-A1-2021/075608
- CN-A- 112 235 442
- DE-U1- 202021 102 729
- KR-A- 20190 101 184
- KR-A- 20200 117 741
- KR-A- 20210 087 765
- KR-B1- 102 258 022
- US-A1- 2021 208 552

## Description

### BACKGROUND

### 1. Field

The disclosure relates to recognizing an extended length of a display of an electronic device that extends and contracts as the display is rolled up.

### 2. Description of Related Art

The development of display technology has accelerated the introduction of a user terminal device with a flexible display. The flexible display refers to a display capable of being bent. The flexible display may include a flexible material (e.g., a plastic film) to have the flexibility that enables the display to be folded and unfolded.

The flexible display may be thin in thickness and light in weight and may also be robust against an impact. In addition, the flexible display may be curved and bent and may thus be manufactured in various shapes. The flexible display may be implemented as a foldable display or a rollable display.

The following prior art publications are related to devices with a rollable display:
- DE 20 2021 102729 U1 entitled "Sensor device for determining relative position, electronic device including same and method for determining relative position"; and
- US 2021/208552 A1 entitled "Display apparatus".

### SUMMARY

Aspects of various embodiments of the present disclosure provide an electronic device that may recognize an extended length of a rollable display, the aspects being defined in the appended claims.

Other features and aspects will be apparent from the following detailed description, the drawings, and the claims.

### BRIEF DESCRIPTION OF THE DRAWINGS

The above and other aspects, features, and advantages of certain embodiments of the present disclosure will be more apparent from the following detailed description, taken in conjunction with the accompanying drawings, in which:
FIG. 1 is a block diagram illustrating an example electronic device in a network environment according to an embodiment;
FIGS. 2A and 2B are front perspective views of an example electronic device in a closed state and an open state according to an embodiment;
FIGS. 3A and 3B are rear perspective views of an example electronic device in a closed state and an open state according to an embodiment;
FIG. 4 is a diagram illustrating an example of extension and contraction of a display screen according to rotational driving of an electronic device according to an embodiment;
FIGS. 5 and 6 are diagrams illustrating example arrangements of a motor according to various embodiments;
FIG. 7 is a diagram illustrating an example arrangement of Hall sensors according to an embodiment;
FIG. 8 is a diagram illustrating an example extending direction of a display screen according to an embodiment;
FIG. 9 is a diagram illustrating an example controller of a display module according to an embodiment;
FIG. 10 is a flowchart illustrating an example method of determining an extended screen length of a display screen according to according to an embodiment;
FIG. 11 is a diagram illustrating an example pattern of reference magnetic force information according to according to an embodiment;
FIG. 12 is a flowchart illustrating a detailed example method of determining an extended screen length of a display screen according to an embodiment;
FIG. 13 is a diagram illustrating an example of controlling a driving speed of a motor according to an embodiment; and
FIG. 14 is a diagram illustrating an example output content adjusted in response to an extended screen length according to an embodiment.

### DETAILED DESCRIPTION

Hereinafter, various embodiments will be described in greater detail with reference to the accompanying drawings. When describing the embodiments with reference to the accompanying drawings, like reference numerals refer to like elements and a repeated description related thereto will be omitted.

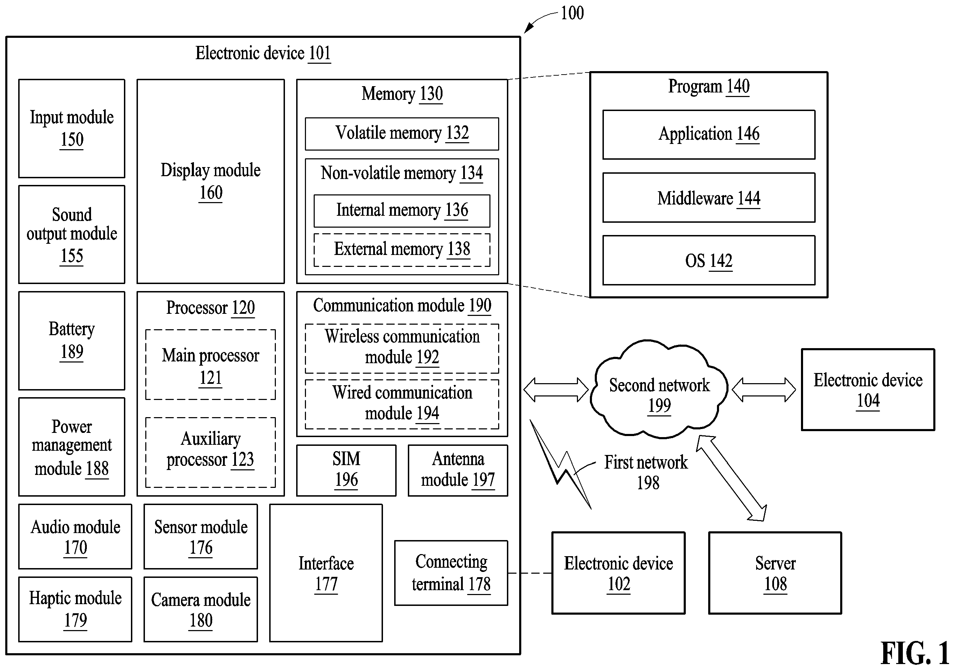

FIG. 1 is a block diagram illustrating an example electronic device in a network environment according to an embodiment.

Referring to FIG. 1, an electronic device 101 in a network environment 100 may communicate with an electronic device 102 via a first network 198 (e.g., a short-range wireless communication network), or communicate with at least one of an electronic device 104 and a server 108 via a second network 199 (e.g., a long-range wireless communication network). According to an embodiment, the electronic device 101 may communicate with the electronic device 104 via the server 108. According to an embodiment, the electronic device 101 may include a processor 120, a memory 130, an input module 150, a sound output module 155, a display module 160, an audio module 170, and a sensor module 176, an interface 177, a connecting terminal 178, a haptic module 179, a camera module 180, a power management module 188, a battery 189, a communication module 190, a subscriber identification module (SIM) 196, or an antenna module 197. In various embodiments, at least one (e.g., the connecting terminal 178) of the above components may be omitted from the electronic device 101, or one or more other components may be added to the electronic device 101. In various embodiments, some (e.g., the sensor module 176, the camera module 180, or the antenna module 197) of the components may be integrated as a single component (e.g., the display module 160).

The processor 120 may execute, for example, software (e.g., a program 140) to control at least one other component (e.g., a hardware or software component) of the electronic device 101 connected to the processor 120 and may perform various data processing or computations. According to an embodiment, as at least a part of data processing or computations, the processor 120 may store a command or data received from another component (e.g., the sensor module 176 or the communication module 190) in a volatile memory 132, process the command or data stored in the volatile memory 132, and store resulting data in a non-volatile memory 134. According to an embodiment, the processor 120 may include a main processor 121 (e.g., a central processing unit (CPU) or an application processor (AP)) or an auxiliary processor 123 (e.g., a graphics processing unit (GPU), a neural processing unit (NPU), an image signal processor (ISP), a sensor hub processor, or a communication processor (CP)) that is operable independently from or in conjunction with, the main processor 121. For example, when the electronic device 101 includes the main processor 121 and the auxiliary processor 123, the auxiliary processor 123 may be adapted to consume less power than the main processor 121 or to be specific to a specified function. The auxiliary processor 123 may be implemented separately from the main processor 121 or as a part of the main processor 121.

The auxiliary processor 123 may control at least some of functions or states related to at least one (e.g., the display device 160, the sensor module 176, or the communication module 190) of the components of the electronic device 101, instead of the main processor 121 while the main processor 121 is in an inactive (e.g., sleep) state or along with the main processor 121 while the main processor 121 is an active state (e.g., executing an application). According to an embodiment, the auxiliary processor 123 (e.g., an ISP or a CP) may be implemented as a portion of another component (e.g., the camera module 180 or the communication module 190) that is functionally related to the auxiliary processor 123. According to an embodiment, the auxiliary processor 123 (e.g., an NPU) may include a hardware structure specifically for artificial intelligence (AI) model processing. An AI model may be generated by machine learning. The machine learning may be performed by, for example, the electronic device 101, in which the AI model is performed, or performed via a separate server (e.g., the server 108). Learning algorithms may include, but are not limited to, for example, supervised learning, unsupervised learning, semi-supervised learning, or reinforcement learning. The AI model may include a plurality of artificial neural network layers. An artificial neural network may include, for example, a deep neural network (DNN), a convolutional neural network (CNN), a recurrent neural network (RNN), a restricted Boltzmann machine (RBM), a deep belief network (DBN), and a bidirectional recurrent deep neural network (BRDNN), a deep Q-network, or a combination of two or more thereof, but is not limited thereto. The AI model may alternatively or additionally include a software structure other than the hardware structure.

The memory 130 may store various pieces of data used by at least one component (e.g., the processor 120 or the sensor module 176) of the electronic device 101. The various pieces of data may include, for example, software (e.g., the program 140) and input data or output data for a command related thereto. The memory 130 may include the volatile memory 132 or the non-volatile memory 134. The non-volatile memory 134 may include an internal memory 136 and an external memory 138.

The program 140 may be stored as software in the memory 130 and may include, for example, an operating system (OS) 142, middleware 144, or an application 146.

The input module 150 may receive, from outside (e.g., a user) the electronic device 101, a command or data to be used by another component (e.g., the processor 120) of the electronic device 101. The input module 150 may include, for example, a microphone, a mouse, a keyboard, a key (e.g., a button), or a digital pen (e.g., a stylus pen).

The sound output module 155 may output a sound signal to the outside of the electronic device 101. The sound output module 155 may include, for example, a speaker or a receiver. The speaker may be used for general purposes, such as playing multimedia or playing a recording. The receiver may be used to receive an incoming call. According to an embodiment, the receiver may be implemented separately from the speaker or as a part of the speaker.

The display module 160 may visually provide information to the outside (e.g., a user) of the electronic device 101. The display module 160 may include, for example, a display, a hologram device, or a projector, and a control circuitry for controlling a corresponding one of the display, the hologram device, and the projector. According to an embodiment, the display module 160 may include a touch sensor adapted to sense a touch, or a pressure sensor adapted to measure an intensity of a force of the touch.

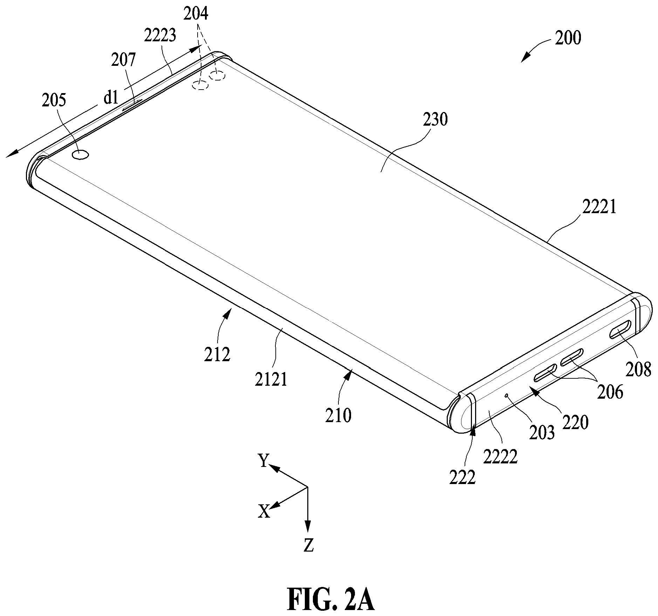

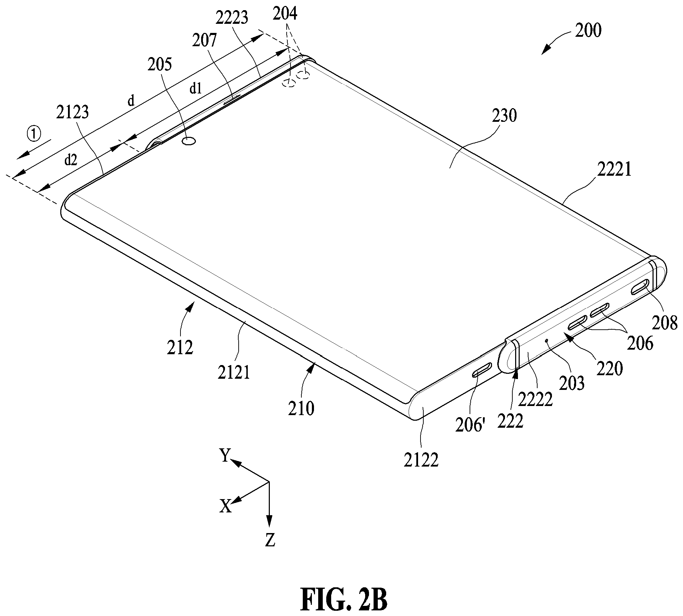

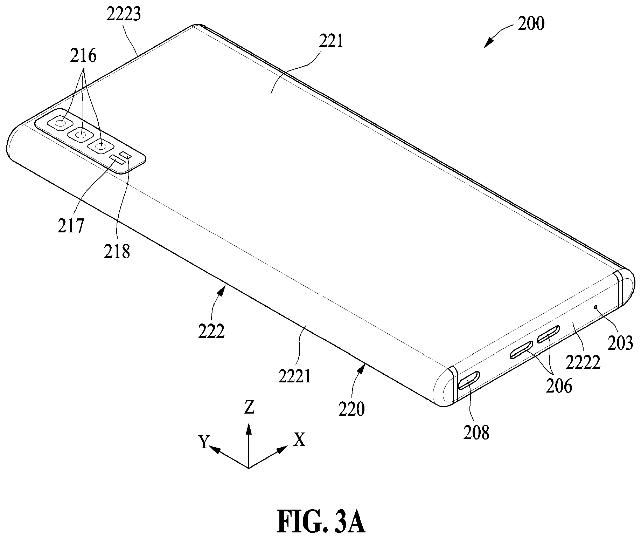

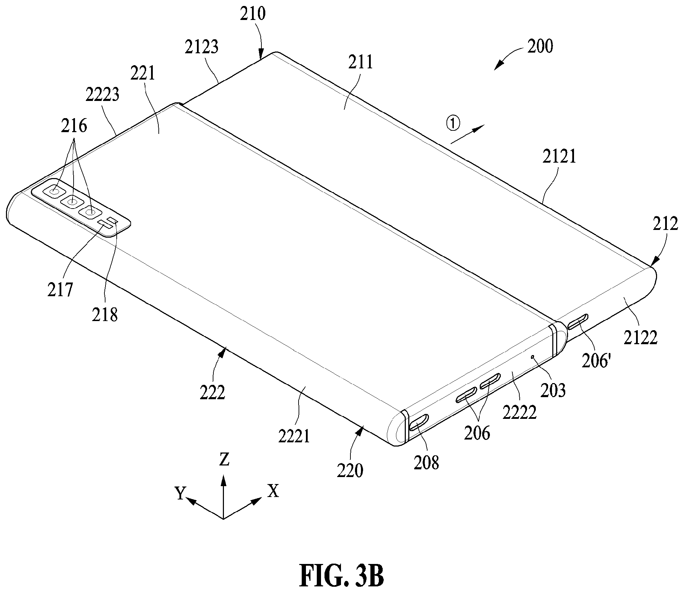

The display module 160 may have an extendable display screen. The display module 160 may be a flexible display, for example. The display module 160 may include a display screen and a remaining screen. The display screen may be a screen corresponding to a viewable portion of the display module 160 that is viewed on one side of the display module 160 (e.g., a side on which a user is present), and the remaining screen may be a screen that is not the display screen. The size of the display screen viewed by the user of the electronic device 101 may change. For example, in the electronic device 101 of a rollable type to be described hereinafter with reference to FIGS. 2A, 2B, 3A, and 3B, a display screen of a flexible display may extend by an opening operation performed as a housing moves. According to various embodiments, the display screen described herein may be a screen of the display module 160 on which a content is output, and at least a portion of the display screen may be bendable and/or flexible. For example, a user interface (UI) may be displayed on a portion of the flexible display that is bent or unfolded after being bent and be included in the display screen. This portion of the flexible display that may be bent may be referred to as a bendable portion.

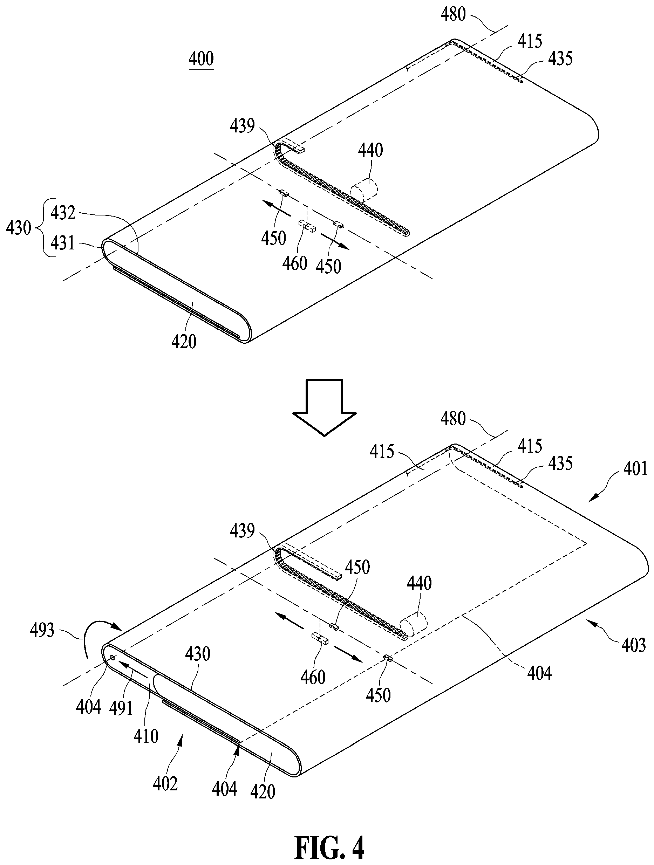

In the electronic device 101 of the rollable type described above, an actuator may induce and/or actuate a mechanical deformation (e.g., a movement of the housing) to extend and contract the display screen of the display module 160 (e.g., the flexible display) on which the UI is displayed. For example, when a relative position between housings (e.g., a first housing 210 and a second housing 220 to be described below with reference to FIGS. 2A and 2B, and 3A and 3B) is changed by the actuator, the actuator may be configured to distribute a force to be applied to each of the housings for smooth extension and/or contraction. For example, the actuator may include one or a combination of two or more of a rail (e.g., a rail member 439 of FIG. 4), a gear, and a spring to distribute the force to each of the housings. Accordingly, the actuator may prevent an internal circuit or a mechanism from being damaged by an instantaneously intense force.

The actuator may include a motor module 165, for example. The motor module 165 may generate a rotational force by driving a motor in response to an electrical signal from the processor 120. The rotational force generated by rotational driving of the motor module 165 may extend or contract the display screen. For example, the actuator may extend or contract the display screen of the display module 160 through automatically rotational driving by the motor module 165, or may be actuated to allow a housing (e.g., a movable housing) to be manually moved by an external force applied by the user.

The motor module 165 may include the motor configured to perform the rotational driving and/or a control circuit configured to control the motor. A rotational direction and a rotational speed of the motor module 165 may be controlled by the processor 120 (e.g., the auxiliary processor 123). For example, the processor 120 may execute a driver for controlling the motor module 165. The display module 160 may be coupled (or connected) to the motor. A portion of the display module 160 and the motor may be coupled (or connected) through a coupling member (e.g., the rail member 439 of FIG. 4) such that at least one of the portion of the display module 160 or the motor is movable. An area of the display module 160 may be rolled or unrolled (or unfolded) by the coupling (or connection) between the display module 160 and the motor through the coupling member and by the rotational driving of the motor, which will be described in greater detail below with reference to FIGS. 4 through 6.

A length of the display screen that extends (or also referred to herein as an extended length or an extended screen length) by the rotational driving of the motor may be estimated based on motor driving information. The motor driving information may include the number of rotations of the motor and/or a transfer length per unit rotation. For example, the motor module 165 may further include an encoder using a light source, and the electronic device 101 may recognize the number of rotations during the rotational driving of the motor through the encoder. For example, light emitted from the light source may blink at predetermined angular intervals by a rotation of the motor, and the electronic device 101 may detect the number of blinks through a photodetector. The electronic device 101 may obtain, as the motor driving information, a rotation angle and/or the number of rotations of the motor based on the number of the blinks. For another example, the motor module 165 may include a step motor. The step motor may rotate by a predetermined rotation angle in response to an electric pulse, and thus the number of rotations of the step motor may be determined based on an applied electric pulse (e.g., the number of electric pulses and intensity of the electric pulse). The transfer length per unit rotation may refer to a length of transferring at least a portion of the display screen for a single rotation. The transfer length per unit rotation may be determined based on a power transfer structure (e.g., a gear ratio) from the motor to the display screen. However, embodiments are not limited thereto, and a transfer length per unit rotation angle may be used instead of the transfer length per unit rotation.

The electronic device 101 may detect a stoppage (or halt) during the rotational driving of the motor. For example, the electronic device 101 may detect a stall caused by a physical jam while the motor is rotating. The stall may refer to a phenomenon in which the motor stops rotating due to an insufficient force (e.g., torque) to turn a load despite a flow of a current in the motor. A current flowing in the motor when the stall occurs may be different from a current flowing in the motor when the motor rotates. For example, a current consumed by the motor while the motor is rotating may have a frequency that dynamically changes due to an inverse voltage of the motor. However, when such a physical stoppage occurs during a rotation of the motor, the frequency of the consumed current of the motor may become constant. The electronic device 101 may thus monitor a current flowing in the motor and/or a voltage corresponding to the current to detect an occurrence of the stall. For example, to change (e.g., increase or decrease) an extended screen length to a target length, the electronic device 101 may instruct the motor to operate according to a target number of rotations corresponding to the target length. The electronic device 101 may detect the stall as described above and may thereby recognize a stoppage that may occur in the motor before rotational driving according to the target number of rotations is completed. The electronic device 101 may detect the stall and may thereby recognize a mechanical jam, a forced driving stoppage by an external force applied by the user, and whether the extended screen length reaches a minimum length or a maximum length. For example, when the stall is detected, the electronic device 101 may end an operation of the motor by blocking an electrical signal from being applied to the motor.

The audio module 170 may convert sound into an electric signal or vice versa. According to an embodiment, the audio module 170 may obtain the sound via the input module 150 or output the sound via the sound output module 155 or an external electronic device (e.g., the electronic device 102, such as a speaker or headphones) directly or wirelessly connected to the electronic device 101.

The sensor module 176 may detect an operational state (e.g., power or temperature) of the electronic device 101 or an environmental state (e.g., a state of a user) external to the electronic device 101 and generate an electric signal or data value corresponding to the detected state. According to an embodiment, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

In addition, the sensor module 176 may include a Hall sensor. The Hall sensor may sense a magnetic force based on a relative position between magnets with respect to the Hall sensor to be described below with reference to FIGS. 4 through 6, and may sense a change in magnetic force based on a change in the position of the magnets. For example, the Hall sensor may sense a magnetic field by a magnet arranged inside the electronic device 101. For example, the Hall sensor may generate, as magnetic field data, a signal (e.g., a voltage signal) corresponding to a magnetic field that changes according to the Hall effect. The Hall sensor may sense a change in magnetic field strength caused by a movement of a magnet according to a change in length of an exposed area on the display screen. The magnetic field data generated through magnetic force sensing performed using one or more Hall sensors may be represented as sensed magnetic force information. The processor 120 (e.g., the auxiliary processor 123) of the electronic device 101 may generate the sensed magnetic force information indicating a magnetic field strength value sensed by each of the Hall sensors based on the magnetic force sensing by each of the Hall sensors. The sensed magnetic force information may mainly include a magnetic field component (e.g., an internal magnetic field component) generated by a magnet arranged in the electronic device 101.

The interface 177 may support one or more specified protocols to be used by the electronic device 101 to couple with an external electronic device (e.g., the electronic device 102) directly (e.g., by wire) or wirelessly. According to an embodiment, the interface 177 may include, for example, a high-definition multimedia interface (HDMI), a universal serial bus (USB) interface, a secure digital (SD) card interface, or an audio interface.

The connecting terminal 178 may include a connector via which the electronic device 101 may physically connect to an external electronic device (e.g., the electronic device 102). According to an embodiment, the connecting terminal 178 may include, for example, an HDMI connector, a USB connector, an SD card connector, or an audio connector (e.g., a headphones connector).

The haptic module 179 may convert an electrical signal into a mechanical stimulus (e.g., a vibration or a movement) or an electrical stimulus, which may be recognized by the user via their tactile sensation or kinesthetic sensation. According to an embodiment, the haptic module 179 may include, for example, a motor, a piezoelectric element, or an electric stimulator.

The camera module 180 may capture a still image and moving images. According to an embodiment, the camera module 180 may include one or more lenses, image sensors, ISPs, and flashes.

The power management module 188 may manage power supplied to the electronic device 101. According to an embodiment, the power management module 188 may be implemented as, for example, at least a part of a power management integrated circuit (PMIC).

The battery 189 may supply power to at least one component of the electronic device 101. According to an embodiment, the battery 189 may include, for example, a primary cell, which is not rechargeable, a secondary cell, which is rechargeable, or a fuel cell.

The communication module 190 may support establishing a direct (e.g., wired) communication channel or a wireless communication channel between the electronic device 101 and an external electronic device (e.g., the electronic device 102, the electronic device 104, or the server 108) and performing communication via the established communication channel. The communication module 190 may include one or more CPs that are operable independently from the processor 120 (e.g., an AP) and that support direct (e.g., wired) communication or wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device, for example, the electronic device 104, via the first network 198 (e.g., a short-range communication network, such as Bluetooth^{™}, wireless-fidelity (Wi-Fi) direct, or infrared data association (IrDA)) or the second network 199 (e.g., a long-range communication network, such as a legacy cellular network, a 5G network, a next-generation communication network, the Internet, or a computer network (e.g., a LAN or a wide area network (WAN)). These various types of communication modules may be implemented as a single component (e.g., a single chip), or may be implemented as multiple components (e.g., multiple chips) separate from each other. The wireless communication module 192 may identify and authenticate the electronic device 101 in a communication network, such as the first network 198 or the second network 199, using subscriber information (e.g., international mobile subscriber identity (IMSI)) stored in the SIM 196.

The wireless communication module 192 may support a 5G network after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., a mmWave band) to achieve, e.g., a high data transmission rate. The wireless communication module 192 may support various technologies for securing performance on a high-frequency band, such as, e.g., beamforming, massive multiple-input and multiple-output (MIMO), full dimensional MIMO (FD-MIMO), an antenna array, analog beamforming, or a large-scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20 Gbps or more) for implementing eMBB, loss coverage (e.g., 164 dB or less) for implementing mMTC, or U-plane latency (e.g., 0.5 ms or less for each of downlink (DL) and uplink (UL), or a round trip of 1 ms or less) for implementing URLLC.

The antenna module 197 may transmit or receive a signal or power to or from the outside (e.g., an external electronic device) of the electronic device 101. According to an embodiment, the antenna module 197 may include an antenna including a radiating element including a conductive material or a conductive pattern formed in or on a substrate (e.g., a printed circuit board (PCB)). According to an embodiment, the antenna module 197 may include a plurality of antennas (e.g., an antenna array). In such a case, at least one antenna appropriate for a communication scheme used in a communication network, such as the first network 198 or the second network 199, may be selected by, for example, the communication module 190 from the plurality of antennas. The signal or power may be transmitted or received between the communication module 190 and the external electronic device via the at least one selected antenna. According to an embodiment, another component (e.g., a radio frequency integrated circuit (RFIC)) other than the radiating element may be additionally formed as a part of the antenna module 197.

According to various embodiments, the antenna module 197 may form a mmWave antenna module. According to an embodiment, the mmWave antenna module may include a PCB, an RFIC on a first surface (e.g., a bottom surface) of the PCB, or adjacent to the first surface of the PCB and capable of supporting a designated high-frequency band (e.g., a mmWave band), and a plurality of antennas (e.g., an antenna array) disposed on a second surface (e.g., a top or a side surface) of the PCB, or adjacent to the second surface of the PCB and capable of transmitting or receiving signals in the designated high-frequency band.

At least some of the above-described components may be coupled mutually and exchange signals (e.g., commands or data) therebetween via an inter-peripheral communication scheme (e.g., a bus, general-purpose input and output (GPIO), serial peripheral interface (SPI), or mobile industry processor interface (MIPI)).

According to an embodiment, commands or data may be transmitted or received between the electronic device 101 and the external electronic device (e.g., the electronic device 104) via the server 108 coupled with the second network 199. Each of the external electronic devices (e.g., the electronic device 102 and 104) may be a device of the same type as or a different type from the electronic device 101. According to an embodiment, all or some of operations to be executed by the electronic device 101 may be executed by one or more of the external electronic devices (e.g., the electronic devices 102 and 104, and the server 108). For example, if the electronic device 101 needs to perform a function or a service automatically, or in response to a request from a user or another device, the electronic device 101, instead of, or in addition to, executing the function or the service, may request one or more external electronic devices to perform at least a part of the function or service. The one or more external electronic devices receiving the request may perform the at least part of the function or service requested, or an additional function or an additional service related to the request, and may transfer a result of the performance to the electronic device 101. The electronic device 101 may provide the result, with or without further processing of the result, as at least a part of a response to the request. To that end, cloud computing, distributed computing, mobile edge computing (MEC), or client-server computing technology may be used, for example. The electronic device 101 may provide ultra-low latency services using, e.g., distributed computing or MEC. In an embodiment, the external electronic device (e.g., the electronic device 104) may include an Internet-of-things (IoT) device. The server 108 may be an intelligent server using machine learning and/or a neural network. According to an embodiment, the external electronic device (e.g., the electronic device 104) or the server 108 may be included in the second network 199. The electronic device 101 may be applied to intelligent services (e.g., a smart home, a smart city, a smart car, or healthcare) based on 5G communication technology or IoT-related technology.

FIGS. 2A and 2B are front perspective views of an electronic device 200 in a closed state and an open state according to an embodiment. FIGS. 3A and 3B are rear perspective views of the electronic device 200 in a closed state and an open state according to an embodiment.

The electronic device 200 of FIG. 2A may be at least partially similar to the electronic device 101 of FIG. 1, or may further include other components according to other embodiments.

Referring to FIGS. 2A and 2B, and 3A and 3B, according to an embodiment, the electronic device 200 may include a first housing 210, and a second housing 220 that is at least partially movably coupled to the first housing 210. The first housing 210 may include a first plate 211, and a first side frame 212 that extends in a substantially vertical direction (e.g., a z-axis direction) along an edge of the first plate 211. The first side frame 212 may include a first side surface 2121, a second side surface 2122 extending from one end of the first side surface 2121, and a third side surface 2123 extending from the other end of the first side surface 2121. The first housing 210 may include a first space that is at least partially closed from the outside through the first plate 211 and the first side frame 212.

The second housing 220 may include a second plate 221, and a second side frame 222 that extends in a substantially vertical direction (e.g., the z-axis direction) along an edge of the second plate 221. The second side frame 222 may include a fourth side surface 2221 facing an opposite direction of the first side surface 2121, a fifth side surface 2222 extending from one end of the fourth side surface 2221 and at least partially coupled to the second side surface 2122, and a sixth side surface 2223 extending from the other end of the fourth side surface 2221 and at least partially coupled to the third side surface 2123. According to another embodiment, the fourth side surface 2221 may extend from another structure that is not the second plate 221 to be coupled to the second plate 221. The second housing 220 may include a second space that is at least partially closed from the outside through the second plate 221 and the second side frame 222. The first plate 211 and the second plate 221 may be disposed to form at least partially a rear surface of the electronic device 200. For example, the first plate 211, the second plate 221, the first side frame 212, and the second side frame 222 may be formed of, for example, a polymer, coated or colored glass, ceramic, metal (e.g., aluminum, stainless steel (STS), or magnesium), or a combination of two or more of the foregoing materials.

The electronic device 200 may include a flexible display 230 supported by the first housing 210 and the second housing 220. The flexible display 530 may include a flat portion supported by the second housing 220, and a bendable portion extending from the flat portion and supported by the first housing 210. The bendable portion of the flexible display 230 may be disposed in the first space of the first housing 210 not to be exposed to the outside in a closed state in which the electronic device 200 is closed, and may be exposed to the outside to extend from the flat portion while being supported by the first housing 210 in an open state in which the electronic device 200 is open. Accordingly, the electronic device 200 may be a rollable electronic device of which a display screen of the flexible display 230 extends in response to an opening operation performed as the first housing 210 moves from the second housing 220.

In the electronic device 200, the first housing 210 may be at least partially inserted into **the second** space of the second housing 220, and may be coupled to be movable in a direction indicated by ①. For example, in the closed state, the electronic device 200 may be maintained in a state in which the first housing 210 and the second housing 220 are coupled such that the first side surface 2121 and the fourth side surface 2221 have a first distance d1 therebetween. In the open state, the electronic device 200 may be maintained in a state in which the first housing 210 protrudes from the second housing 220 to have a second interval distance d in which the first side surface 2121 protrudes from the fourth side surface 2221 by a predetermined distance d2. The flexible display 230 may be supported by the first housing 210 and/or the second housing 220 such that both ends thereof have curved edges, in the open state.

The electronic device 200 may automatically transition between the open state and the closed state by a driving unit disposed in the first space and/or the second space. For example, when detecting an event for the transition between the open state and the closed state of the electronic device 200, a processor (e.g., the processor 120 of FIG. 1) of the electronic device 200 may be configured to control an operation of the first housing 210 through the driving unit. According to another embodiment, the first housing 210 may manually protrude from the second housing 220 through a manipulation performed by a user. In this case, the first housing 210 may protrude by a protrusion amount desired by the user, and a screen of the flexible display 230 may thereby change to have various display areas according to the amount. Accordingly, the processor of the electronic device 200 may display an object in various ways corresponding to a display area corresponding to the predetermined protrusion amount of the first housing 210, and may control the execution of an application program.

The electronic device 200 may include at least one of an input device 203, sound output devices 206 and 207, sensor modules 204 and 217, camera modules 205 and 216, a connector port 208, a key input device (not shown), or an indicator (not shown). According to another embodiment, at least one of the foregoing components of the electronic device 200 may be omitted, or the electronic device 200 may further include other components.

The input device 203 may include a microphone 203. For example, the input device 203 may include a plurality of microphones 203 arranged to sense a direction of sound. The sound output devices 206 and 207 may include speakers 206 and 207. The speakers 206 and 207 may include an external speaker 206 and a call receiver 207. According to another embodiment, when an external speaker 206' is disposed in the first housing 210, sound may be output through a speaker hole 206 formed in the second housing 220 in the closed state. The microphone 203 or the connector port 208 may also be formed to be substantially identical to each other in their configuration. According to another embodiment, the sound output devices 206 and 207 may include a speaker (e.g., a piezo speaker) that operates without a separate speaker hole 206.

The sensor modules 204 and 217 may generate an electrical signal or a data value corresponding to an internal operating state of the electronic device 200 or an external environmental state. For example, the sensor modules 204 and 217 may include a first sensor module 204 (e.g., a proximity sensor or an illuminance sensor) on a front surface of the second housing 220, and/or a second sensor module 217 (e.g., a heart rate monitoring (HRM) sensor) on a rear surface of the second housing 220. In this example, the first sensor module 204 may be positioned below the flexible display 230 in the second housing 220. The first sensor module 204 may further include, for example, at least one of a proximity sensor, an illuminance sensor, a time of flight (TOF) sensor, an ultrasonic sensor, a fingerprint recognition sensor, a gesture sensor, a gyro sensor, an atmospheric pressure sensor, a magnetic sensor, an acceleration sensor, a grip sensor, a color sensor, an infrared (IR) sensor, a biometric sensor, a temperature sensor, or a humidity sensor.

The camera devices 205 and 216 may include a first camera device 205 on the front surface of the second housing 220, and a second camera 216 on the rear surface of the second housing 220. The electronic device 200 may include a flash 218 positioned near the second camera device 216. The camera devices 205 and 216 may include one or more lenses, an image sensor, and/or an ISP. The first camera device 205 may be positioned under the flexible display 230 and may be configured to capture an image of an object through a portion of an active area of the flexible display 230. The flash 218 may include, for example, a light-emitting diode (LED) or a xenon lamp. In some embodiments, two or more lenses (e.g., a wide-angle lens and a telephoto lens) and image sensors may be arranged on one surface of the electronic device 200.

The electronic device 200 may include at least one antenna (not shown). The antenna may wirelessly communicate with an external electronic device (e.g., the electronic device 104 of FIG. 1), or may wirelessly transmit and receive power required for charging. The antenna may include, for example, a legacy antenna, a mmWave antenna, a near field communication (NFC) antenna, a wireless charging antenna, and/or a magnetic secure transmission (MST) antenna. According to another embodiment, a structure of the antenna may be formed through at least a portion of the first side frame 212 and/or the second side frame 222, which are formed of metal.

According to various embodiments described herein, an electronic device may be a device of one of various types. The electronic device may include, for example, a portable communication device (e.g., a smartphone, etc.), a computing device, a portable multimedia device, a portable medical device, a camera, a wearable device, or a home appliance. However, the electronic device is not limited to the foregoing examples.

It should be appreciated that various embodiments of the present disclosure and the terms used therein are not intended to limit the technological features set forth herein to particular embodiments and include various changes, equivalents, or replacements for a corresponding embodiment. In connection with the description of the drawings, like reference numerals may be used for similar or related components. It is to be understood that a singular form of a noun corresponding to an item may include one or more of the things unless the relevant context clearly indicates otherwise. As used herein, "A or B," "at least one of A and B," "at least one of A or B," "A, B or C," "at least one of A, B and C," and "A, B, or C," each of which may include any one of the items listed together in the corresponding one of the phrases, or all possible combinations thereof. Terms such as "first," "second," or "first" or "second" may simply be used to distinguish the component from other components in question, and do not limit the components in other aspects (e.g., importance or order). It is to be understood that if an element (e.g., a first element) is referred to, with or without the term "operatively" or "communicatively," as "coupled with," "coupled to," "connected with," or "connected to" another element (e.g., a second element), it means that the element may be coupled with the other element directly (e.g., by wire), wirelessly, or via a third element.

As used in connection with various embodiments of the disclosure, the term "module" may include a unit implemented in hardware, software, or firmware, and may interchangeably be used with other terms, for example, "logic," "logic block," "part," or "circuitry." A module may be a single integral component, or a minimum unit or part thereof, adapted to perform one or more functions. For example, according to an embodiment, the module may be implemented in the form of an application-specific integrated circuit (ASIC).

Various embodiments set forth herein may be implemented as software (e.g., the program 140) including one or more instructions that are stored in a storage medium (e.g., the internal memory 136 or the external memory 138) that is readable by a machine (e.g., the electronic device 101). For example, a processor (e.g., the processor 120) of the machine (e.g., the electronic device 101) may invoke at least one of the one or more instructions stored in the storage medium and execute it. This allows the machine to be operated to perform at least one function according to the at least one instruction invoked. The one or more instructions may include code generated by a complier or code executable by an interpreter. The machine-readable storage medium may be provided in the form of a non-transitory storage medium. Here, the term "non-transitory" simply means that the storage medium is a tangible device, and does not include a signal (e.g., an electromagnetic wave), but this term does not differentiate between where data is semi-permanently stored in the storage medium and where the data is temporarily stored in the storage medium.

According to various embodiments, a method according to an embodiment of the disclosure may be included and provided in a computer program product. The computer program product may be traded as a product between a seller and a buyer. The computer program product may be distributed in the form of a machine-readable storage medium (e.g., a compact disc read-only memory (CD-ROM)), or be distributed (e.g., downloaded or uploaded) online via an application store (e.g., PlayStore^{™}) or between two user devices (e.g., smartphones) directly. If distributed online, at least part of the computer program product may be temporarily generated or at least temporarily stored in the machine-readable storage medium, such as a memory of the manufacturer's server, a server of the application store, or a relay server.

According to various embodiments, each component (e.g., a module or a program) of the above-described components may include a single entity or multiple entities, and some of the multiple entities may be separately disposed in different components. According to various embodiments, one or more of the above-described components or operations may be omitted, or one or more other components or operations may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

FIG. 4 is a diagram illustrating an example of extension and contraction of a display screen according to rotational driving of an electronic device according to an embodiment.

According to an embodiment, an electronic device 400 (e.g., the electronic device 200 of FIGS. 2A and 2B, and 3A and 3B) may include a first housing 410 (e.g., the first housing 210 of FIGS. 2A and 2B, and 3A and 3B) and a second housing 420 (e.g., the second housing 220 of FIGS. 2A and 2B, and 3A and 3B). The first housing 410 may be provided to be movable with respect to the second housing 420. For example, as described above with reference to FIGS. 2A and 2B, and 3A and 3B, as the first housing 410 moves farther from the second housing 420 in a direction receding from the second housing 420 along an extension axis by an opening operation, a display screen (e.g., a partial screen corresponding to an area viewable on one side) of a flexible display 430 (e.g., the flexible display 230 of FIGS. 2A and 2B) may extend. Conversely, as the first housing 410 overlaps the second housing 420 by a closing operation, the viewable area of the flexible display 430 may contract. The first housing 410 may also be referred to as a movable housing.

A portion of the flexible display 430 may be fixed to the second housing 420. For example, a rear surface of a first side 401 (e.g., a top side) of the flexible display 430, a rear surface of a second side 402 (e.g., a bottom side) of the flexible display 430, and a rear surface of a third side 403 (e.g., a right side of a top surface of a display module) of the flexible display 430 may be fixed to the second housing 420. A portion corresponding to a fourth side 404 of the flexible display 430 may be fixed to the first housing 410. For example, the portion corresponding to the fourth side 404 of the flexible display 430 may be provided to move as the first housing 410 moves.

According to an embodiment, the electronic device 400 may include an area formed as a portion of the flexible display 430 is rolled. As the flexible display 430 is rolled around one axis (e.g., a rotation axis 480), a size of an area of the display screen to be viewed by a user may decrease on one side (e.g., a side on which the user is present) of the user. As the flexible display 430 is unrolled (or unfolded) from the axis, the size of the area of the display screen may increase. For example, the flexible display 430 may include a fixed portion 432 that is fixed to the second housing 420 and a bendable portion 431 that is connected to the fixed portion 432. The display screen may include a curved portion and a flat portion viewed on one side of the fixed portion 432 and the bendable portion 431. For example, the curved portion may be formed by a rolled portion of the bendable portion 431, and the flat portion may be formed by a flat portion of the bendable portion 431 and a flat portion of the fixed portion 432.

For example, the bendable portion 431 may be bent along a guide member 415 of a housing (e.g., the first housing 410) from the one axis described in the foregoing. The guide member 415, for example, a U-shaped (e.g., partially U-shaped) guide member, may be formed in the first housing 410. In the flexible display 430, a protrusion 435 may be formed on the first side 401 and the second side 402, and may be positioned to be movable with respect to the guide member 415 (e.g., a U-shaped groove). Although the protrusion 435 is illustrated as being formed on the rear surface of the first side 401 of the flexible display 430 in FIG. 4, examples are not limited thereto. For example, and the protrusion 435 may be formed on the rear surface of the second side 402 of the flexible display 430, or be formed on the rear surface of both the first side 401 and the second side 402. The bendable portion 431 of the flexible display 430 may be transferred by rotational driving of a motor 440. Since the fixed portion 432 of the flexible display 430 is fixed to the second housing 420, the first housing 410 may be transferred in one direction 491 as the bendable portion 431 is transferred by the rotational driving of the motor 440. For example, as the first housing 410 moves, the rotation axis 480 may also move.

A portion adjacent to one axis in the bendable portion 431 may rotate in a rotational direction 493 with respect to the one axis. The rotational direction 493 may be a clockwise or counterclockwise direction with respect to the axis (e.g., the rotation axis 480). Accordingly, the bendable portion 431 may be exposed to the outside from the front surface of the electronic device 400 to extend from the fixed portion 432 while being supported by the first housing 410, in an open state of the electronic device 400. For example, as a portion connected to the motor 440 in the bendable portion 431 is pushed in one direction 491, the rolled (or wound) portion of the bendable portion 431 may be unrolled (or unfolded) on the same plane as the fixed portion 432. A size of an area of the unrolled portion may increase by the unrolling, and the display screen may increase. Conversely, as the portion of the bendable portion 431 connected to the motor 440 is pulled in another direction, the rolled portion of the bendable portion 431 may be unrolled inside the electronic device 400 or on another surface of the electronic device 400. For example, as the unrolled portion is rolled, the size of the area of the unrolled portion may decrease, and the display screen may decrease.

A remaining portion (a portion including a remaining screen other than the display screen) excluding the portion (e.g., a portion including the display screen) viewed on one side of the entire flexible display 430 may be positioned inside a housing. For example, when the housing is closed, a display portion positioned inside the housing along a guide member may be positioned to face a direction opposite to the front surface. As the display portion is received inside, a portion of the display portion received inside may be turned off. However, examples are not limited thereto, and the display portion positioned to face the opposite direction to the front surface may also be exposed.

An example in which the rolled portion is unrolled as it is inserted into the electronic device 400 will be mainly described hereinafter according to various embodiments. **In** this example, as a portion of the flexible display 430 previously exposed to the outside is rolled around one axis, it may be received inside not to be exposed. The electronic device 400 may activate the exposed portion of the flexible display 430 to output a content thereon, and deactivate a portion that is not exposed (also referred to as a non-exposed portion).

However, examples are not limited to the foregoing example, and the rolled portion may be unrolled on another surface (e.g., the rear surface) of the electronic device 400. **In** this case, a first unrolled portion positioned on the same plane as the fixed portion 432 in the bendable portion 431 of the flexible display 430 may be viewed on one side (e.g., a side corresponding to the front surface), and a second unrolled portion positioned on the same plane as the fixed portion 432 in the bendable portion 431 may be viewed on an opposite side (e.g., a side corresponding to the rear surface). The electronic device 400 may output a content on the display screen of the front surface and the remaining screen of the rear surface.

According to an embodiment, the motor 440 may be connected to the flexible display 430 as described above. The motor 440 may move a portion of the bendable portion 431 in one direction (e.g., a direction perpendicular to the rotation axis 480) or the other direction opposite to the one direction by rotational driving, and may thereby change a size of the unrolled portion of the flexible display 430. The motor 440 may move a housing (e.g., the first housing 410) connected to the display module (e.g., the flexible display 430) by the rotational driving, and may thereby perform one of an operation of increasing the size of the display screen and an operation of decreasing the size of the display screen. For example, the motor 440 may perform the operation of increasing the size of the display screen through the rotational driving, by pushing a portion (e.g., the first housing 410) connected to the flexible display 430 in one direction 491 such that the rolled portion of the flexible display 430 is unrolled. In addition, the motor 440 may perform the operation of decreasing the size of the display screen through the rotational driving, by pulling the portion connected to the flexible display 430 in the other direction (e.g., a direction opposite to the one direction 491) such that the unrolled portion is rolled. For example, the motor 440 may transfer one end of the bendable portion 431 in one direction 491 toward one axis (e.g., the rotation axis 480), and may thereby unroll the rolled portion of the bendable portions 431 on the same plane as the fixed portion 432. Conversely, the motor 440 may transfer one end of the bendable portion 431 in the other direction receding from the one axis, and may thereby roll the portion of the bendable portion 431 that is unrolled on the same plane as the fixed portion 432 with respect to the one axis. Although the motor 440 is illustrated as a single motor in FIG. 4, examples are not limited thereto. For example, a plurality of rails may be arranged in parallel on one surface (e.g., the rear surface) of the flexible display 430, and a plurality of motors may be respectively connected to the rails.

For example, a content may be output on one surface (e.g., the front surface) of the flexible display 430, and a coupling member that may be coupled to the motor 440 may be disposed on the other surface (e.g., the rear surface) of the flexible display 430. Between the flexible display 430 and the coupling member, a support member for supporting the flexible display 430 may be further included. The flexible display 430 may be coupled to the support member, and the coupling member may be disposed on the support member coupled to the flexible display 430. The coupling member may be, for example, a rail member 439, and may be engaged with a gear of the motor 440. The rail member 439 disposed on the rear surface of the flexible display 430 may move linearly by the rotational driving of the motor 440. This linear movement of the rail member 439 may allow one end (e.g., a portion corresponding to the fourth side 404) of the bendable portion 431 to move in one direction or the other direction on the flexible display 430. In addition, one end of the bendable portion 431 may be fixed to the first housing 410. For example, as one end of the bendable portion 431 moves, the first housing 410 may also slide relative to the second housing 420 to move accordingly.

A magnet 460 may be disposed in the first housing 410 (e.g., inside the first housing 410). As the first housing 410 moves, the magnet 460 may also move. The magnet 460 may be disposed to be movable along one axis while a housing (e.g., the first housing 410) is moving to change the size of the display screen. For example, the magnet 460 may be disposed to be movable in a direction (e.g., one direction or the other direction) corresponding to the one axis according to a movement of the first housing 410 of the flexible display 430.

One or more Hall sensors 450 may sense a magnetic force by the magnet 460 that moves in response to a change in the size of the display screen according to the movement of the housing (e.g., the first housing 410) by the rotational driving. For example, the Hall sensors 450 may include a plurality of Hall sensors 450 spaced apart along an axis parallel to one axis on which the magnet 460 is movable inside the electronic device 400. Although two Hall sensors are illustrated as the Hall sensors 450 in FIG. 4, examples are not limited thereto.

As described above, as the first housing 410 moves, the magnet 460 may move, and the flexible display 430 may be rolled. Accordingly, an extended screen length of the display screen on the flexible display 430 may change. For example, the extended screen length of the display screen may correspond to a moving distance of the magnet 460 by which the magnet 460 moves in one direction or the other direction. The electronic device 400 may sense a position and movement of the magnet 460 through magnetic force sensing performed by the Hall sensors 450, and estimate the extended screen length based on the sensed position and movement of the magnet 460.

An example arrangement of the motor 440 will be described hereinafter.

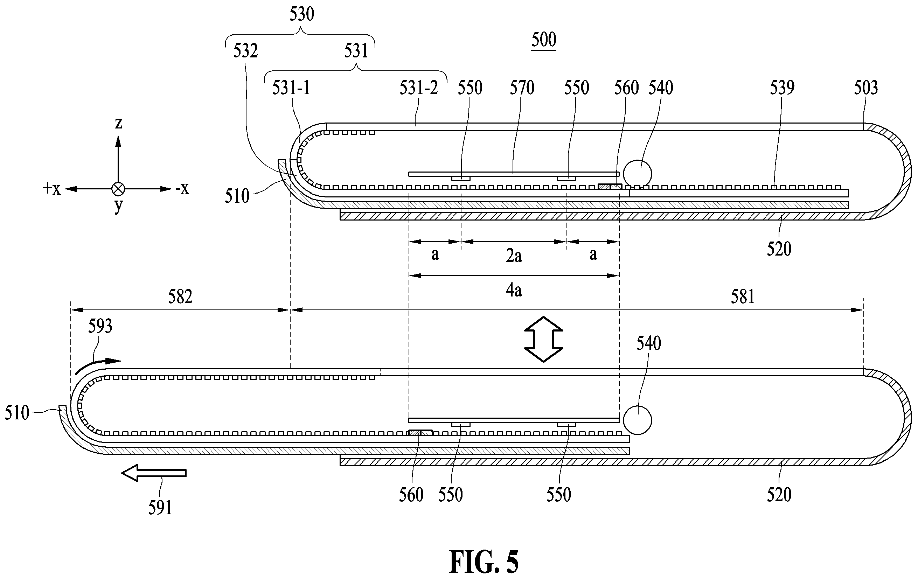

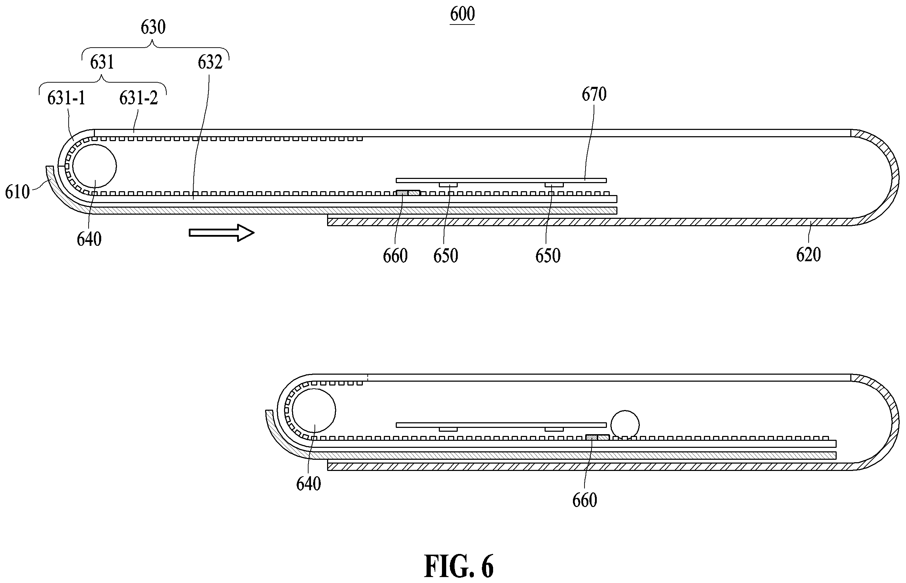

FIGS. 5 and 6 are diagrams illustrating example arrangements of a motor according to various embodiments.

FIG. 5 is a diagram illustrating an example in which a position of a motor 540 is fixed to a second housing 520. For example, an electronic device 500 may roll (or wind) a rail 539 of a flexible display 530 by rotating the motor 540 to push and pull the rail 539. Accordingly, a rotational motion on a y-axis of the motor 540 may be changed to a linear motion in a ±x-axis direction of the rail 539, a first housing 510, and a bendable portion. The bendable portion of the flexible display 530 may be bent along a guide member of the first housing 510. A fixed portion of the flexible display 530 may be fixedly connected to the second housing 520 on a third side 503. A display screen 531 of the flexible display 530 may include a curved portion 531-1 and a flat portion 531-2. A remaining screen 532 of the flexible display 530 may be accommodated in a housing, for example.

For example, the electronic device 500 may display a content on one or both of the curved portion 531-1 and the flat portion 531-2 of the display screen 531. For example, the electronic device 500 may display a content only on the flat portion 531-2 and deactivate the curved portion 531-1. For another example, the electronic device 500 may display a content only on the curved portion 531-1 and deactivate the flat portion 531-2. For still another example, the electronic device 500 may display a content by activating both the curved portion 531-1 and the flat portion 531-2. Although the remaining screen 532 is illustrated as being accommodated inside the electronic device 500 in FIG. 5, the remaining screen 532 may be disposed to be exposed on a rear surface of the electronic device 500. In this case, a content different from one displayed on the display screen 531 exposed on a front surface of the electronic device 500 may be displayed on the remaining screen 532 exposed on the rear surface of the electronic device 500.

**In** the example of FIG. 5, two Hall sensors 550 may be arranged on a substrate 570. The two Hall sensors 550 may sense a movement of the magnet 560 within a sensing distance in one direction or the other direction, respectively. For example, each of the Hall sensors 550 may sense a movement of the magnet 560 within 'a' mm from a corresponding Hall sensor. **In** this example, 'a' may be a real number. The Hall sensors 550 may be spaced apart from each other by a factor of 2 (e.g., 2a millimeters (mm)) of the sensing distance along an x-axis. The two Hall sensors 550 spaced apart as described above may sense a magnetic force by a movement of the magnet 560 within a distance (e.g., 4a mm) that quadruples the individual sensing distance. The distance by which the magnet 560 moves may correspond to a length of the display screen 531 of the flexible display 530 that extends or contracts along the x-axis. The x-axis may be orthogonal to a y-axis and a z-axis. The y-axis may be a reference axis for the rotational motion of the motor 540, and the z-axis may be an axis perpendicular to a screen corresponding to the flat portion 531-2 of the display screen 531 of the flexible display 530.

In a closed state in which the electronic device 500 is closed, an extended screen length 582 of the display screen 531 that extends along the x-axis may be a minimum length (e.g., 0 mm). The extended screen length 582 may be an added length compared to a basic length 581 on the x-axis. The basic length 581 may be a length (e.g., width) on the x-axis of the display screen 531 of the flexible display 530 in the closed state of the electronic device 500. The electronic device 500 may move the magnet 560 and the first housing 510 in one direction 591 (e.g., an x-axis direction). As described above with reference to FIG. 4, as one end of the bendable portion is rolled in a rotational direction 593 while moving in the direction 591 on the flexible display 530, it may be unrolled on the same plane as the fixed portion. In an open state in which the electronic device 500 is fully opened, the extended screen length 582 of the display screen 531 may be a maximum length (e.g., 4a mm). The electronic device 500 may sense, by the Hall sensors 550, a magnetic force caused by the magnet 560 moved by the extended screen length 582 of the display screen 531 that extends on the flexible display 530. Of the Hall sensors 550, a first Hall sensor may sense a movement of the magnet 560 from the minimum length (e.g., 0 mm) to the distance (e.g., 2a mm) two times the sensing distance, and a second Hall sensor may sense a movement of the magnet 560 from the distance (e.g., 2a mm) two times the sensing distance to the maximum distance (e.g., 4a mm).

FIG. 6 is a diagram illustrating an example in which a motor is disposed in a first housing of an electronic device 600 and moves according to a movement of the first housing. **In** the example of FIG. 6, description of such components as a flexible display 630 (e.g., the flexible display 530 of FIG. 5), a display screen 631 (e.g., the display screen 531 of FIG. 5), a curved portion 631-1 (e.g., the curved portion 531-1 of FIG. 5), a flat portion 631-2 ( e.g., the flat portion 531-2 of FIG. 5), a remaining screen 632 (e.g., the remaining screen 532 of FIG. 5), a rail 639 (e.g., the rail 539 of FIG. 5), a first housing 610 (e.g., the first housing 510 in FIG. 5), Hall sensors 650 (e.g., the Hall sensors 550 of FIG. 5), a substrate 670 (e.g., the substrate 570 of FIG. 5), a second housing 620 (e.g., the second housing 520 of FIG. 5), and a magnet 660 (e.g., the magnet 560 of FIG. 5) will be omitted because it has been already provided above with reference to FIG. 5. A motor 640 may roll (or wind) or unroll (or unfold) a bendable portion of the flexible display 630 through rotational driving based on a y-axis, thereby increasing or decreasing an extended screen length (e.g., the extended screen length 582 in FIG. 5) of the display screen 631. As described above, for screen extension or contraction, the motor 640 may move in one direction (e.g., the direction 591 of FIG. 5) or the other direction.

Although, similar to a drawer, a first housing is illustrated in FIGS. 5 and 6 as being received in a second housing and then taken out, examples are not limited thereto. For example, a housing may be movably connected to both sides of the second housing to be extendable to both sides. In this example, a motor may be coupled to a first rail member formed on a rear surface of a first bendable portion at a bottom portion of the motor, and may be coupled to a second rail member formed on a rear surface of a second bendable portion at a top portion of the motor. For example, the first bendable portion and the second bendable portion may be designed to extend in different linear directions with respect to the same rotational direction of the motor. **In** this example, an electronic device may extend a display screen in both directions by pushing the first bendable portion in one direction and pushing the second bendable portion in the other direction through a rotational motion. For another example, the electronic device may include a first motor that pushes one end of the first bendable portion in one direction and a second motor that pushes one end of the second bendable portion in the other direction, in a display module.

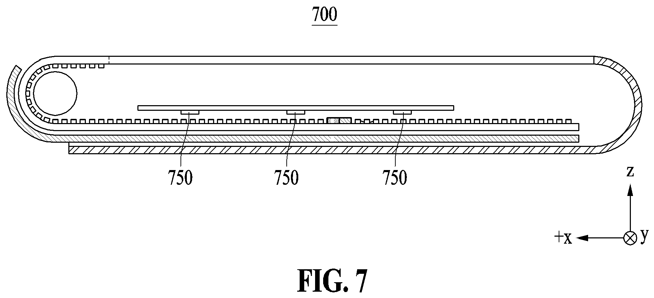

FIG. 7 is a diagram illustrating an example arrangement of Hall sensors according to an embodiment.

Although an example arrangement of two Hall sensors has been described above, examples are not limited thereto. As illustrated in FIG. 7, three or more Hall sensors 750 may be arranged on a substrate along an axis parallel to an axis (e.g., an x-axis) on which a magnet moves. For example, when a sensing distance of each of the Hall sensors 750 is a mm, an electronic device 700 illustrated in FIG. 7 may sense screen extension up to 6a mm (e.g., a+2a+2a+a mm). For example, a maximum extendable screen length and a maximum sensing length based on an arrangement of Hall sensors may be designed to be the same. For example, in a case in which an electronic device is a small terminal such as a mobile phone, two Hall sensors may be arranged as illustrated in FIGS. 5 and 6. However, when the electronic device (e.g., the electronic device 700) is a medium and large-sized terminal such as a tablet, three or more Hall sensors (e.g., the Hall sensors 750) may be arranged as illustrated in FIG. 7. **In** addition, only a single Hall sensor may be arranged based on a maximum extendable screen length of the electronic device.

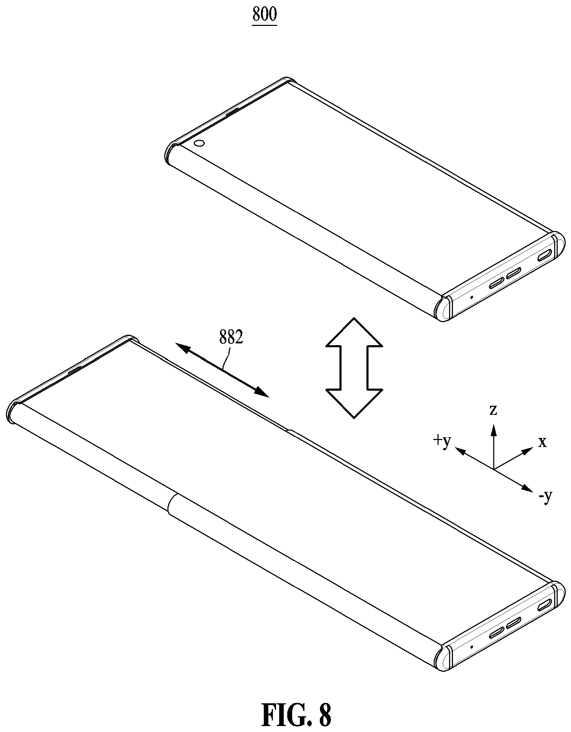

FIG. 8 is a diagram illustrating an example extending direction of a display screen according to an embodiment.

Although an extending direction of a rollable display has been described as a horizontal axis of an electronic device, examples are not limited thereto. As illustrated in FIG. 8, a rollable display may extend along a y-axis of an electronic device 800. Referring to FIG. 8, a motor may rotate on an x-axis, and a housing may linearly move along the y-axis.

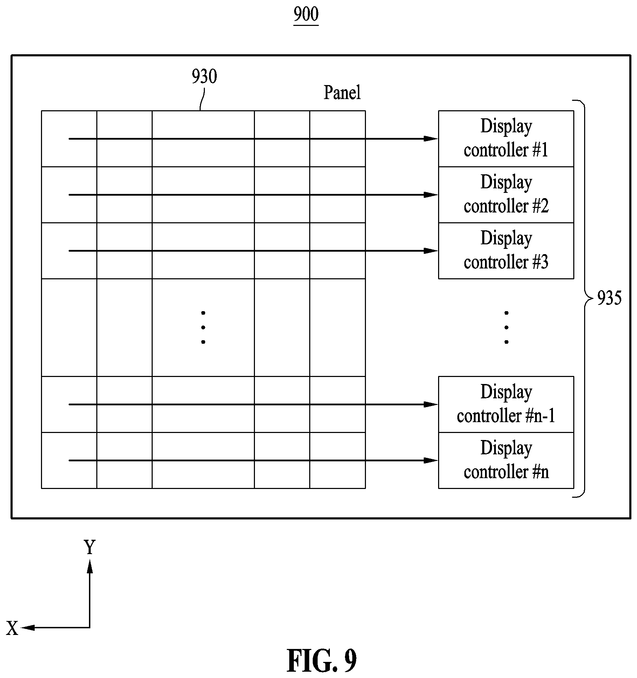

FIG. 9 is a diagram illustrating an example controller of a display module according to an embodiment.

According to an embodiment, an electronic device 900 may activate only a portion (e.g., a display screen 930) of a display module. For example, as described above, a size of an area of the display screen 930 may change according to a screen length extending by the driving of a motor. The electronic device 900 may drive only the display screen 930 in the display module. A plurality of display controllers 935 configured to control a display light-emitting body may be arranged as illustrated in FIG. 9. The electronic device 900 may partially deactivate or activate the display screen 930 through the display controllers 935. The electronic device 900 may output a content on a partial display screen 930 corresponding to a screen length extending along the x-axis orthogonal to the y-axis and to a basic length.

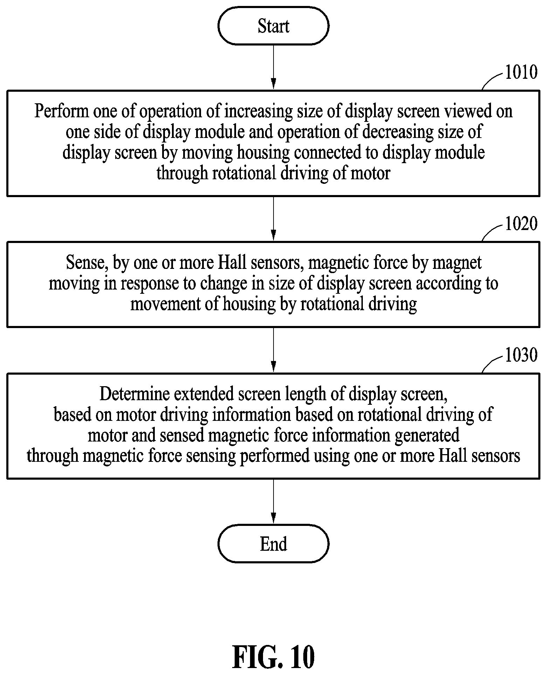

FIG. 10 is a flowchart illustrating an example method of determining an extended screen length of a display screen according to an embodiment.

Operations 1010 through 1030 to be described below with reference to FIG. 10 may be performed by a processor (e.g., the processor 120 of FIG. 1) of an electronic device (e.g., the electronic device 101 of FIG. 1).

**In** operation 1010, the electronic device may contract a display screen by rolling a display module based on one axis or extend the display screen by unrolling the display module based on one axis, through rotational driving of a motor. For example, when receiving a user input for extending the display screen, the electronic device may drive the motor in a first rotational direction and unroll the display module to increase a size of an area of the display screen. For another example, when receiving a user input for contracting the display screen, the electronic device may drive the motor in a direction opposite to the first rotational direction and roll the display module to decrease the size of the area of the display screen.

In operation 1020, the electronic device may sense, using one or more Hall sensors, a magnetic force by a magnet moving according to a change in the size of the display screen by the rotational driving. For example, the magnet may linearly move by a distance corresponding to a screen length by which the magnet extends or contracts by the rotational driving of the motor. The Hall sensors may sense the magnetic force that changes according to the movement of the magnet. For example, the electronic device may generate sensed magnetic force information indicating a magnetic force sensed by each of the Hall sensors. The sensed magnetic force information may include magnetic force values sensed from sensing axes (e.g., an x-axis, a y-axis, and a z-axis) of each of the Hall sensors. For example, each of the Hall sensors may sense a magnetic force from three sensing axes. **In** this example, the sensed magnetic force information may include six magnetic force values sensed from three sensing axes of each of two Hall sensors. The electronic device may continuously collect the sensed magnetic force information.

**In** operation 1030, the electronic device may determine an extended screen length of the display screen (e.g., a screen length extending in one direction), based on motor driving information that is based on the rotational driving of the motor and the sensed magnetic force information generated through magnetic force sensing performed using the Hall sensors.

According to an embodiment, the electronic device may separately perform estimation based on the motor driving information and estimation based on the sensed magnetic force information, and selectively use respective results of the estimation. For example, the electronic device may estimate a first extended screen length of the display screen based on the motor driving information and estimate a second extended screen length of the display screen based on the sensed magnetic force information.

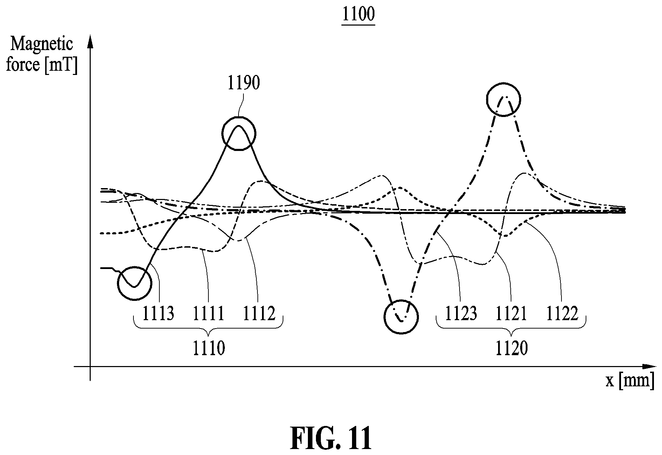

For example, as described above, the electronic device may determine the extended screen length based on the number of rotations of the motor and a transfer length per unit rotation that are included in the motor driving information. The number of rotations of the motor may be denoted as a real number. For example, when the motor rotates half a turn, the number of rotations may be 0.5. However, the motor driving information is not limited thereto, and may include a rotation angle of the motor and a transfer length per unit angle. For another example, the electronic device may determine the extended screen length based on matching between the sensed magnetic force information and reference magnetic force information including reference magnetic force values previously recorded for each extended length. The reference magnetic force information will be described below with reference to FIG. 11.

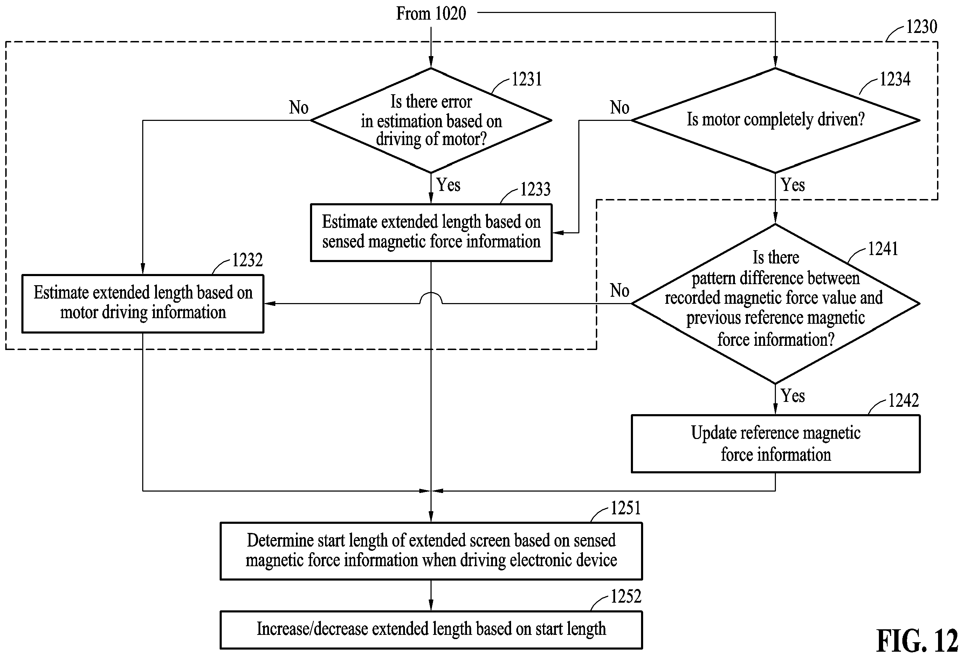

The electronic device may determine, to be the extended screen length, one of an extended length estimated based on the motor driving information and an extended length estimated based on the sensed magnetic force information. For example, when the estimation based on the motor driving information is available, the electronic device may use the first extended screen length estimated based on the motor driving information. For another example, when the estimation based on the motor driving information is unavailable, the electronic device may estimate the extended screen length (e.g., the first extended screen length) based on the matching between the sensed magnetic force information and the pre-stored reference magnetic force information. The estimation of the screen length based on whether the motor driving information is available or unavailable will be described below with reference to FIG. 12.

FIG. 11 is a diagram illustrating an example pattern of reference magnetic force information according to an embodiment.

As described above, one or more Hall sensors may measure a change in magnetic force by a movement of a magnet disposed inside an electronic device (e.g., the electronic device 101 of FIG. 1). While the magnet is moving from a minimum length (e.g., 0 mm) to a maximum length (e.g., 4a mm), the electronic device may record magnetic force values sensed by the Hall sensors for each extended screen length. FIG. 11 illustrates a pattern 1100 of magnetic force values sensed by two Hall sensors. Table 1 below may indicate magnetic force values recorded for each unit length of 1 mm, with a minimum length being 0 mm and a maximum length being 35 mm for the two Hall sensors (including, for example, a first Hall sensor and a second Hall sensor). Table 1 may be an example of reference magnetic force information including a reference magnetic force value required to be sensed for each extended length.

**[Table 1]**

| Distance (mm) | First Hall sensor | | | Second Hall sensor | | |
|---|---|---|---|---|---|---|
| | X | Y | Z | X | Y | Z |
| 1 | Datal _X1 | Datal _Y1 | Datal _Z1 | Data2_X1 | Data2_Y1 | Data2_Z1 |
| 2 | Data1_X2 | Datal _Y2 | Datal _Z2 | Data2_X2 | Data2_Y2 | Data2_Z2 |
| 3 | Data1_X3 | Datal _Y3 | Datal _Z3 | Data2_X3 | Data2_Y3 | Data2_Z3 |
| 4 | Data1 _X4 | Datal _Y4 | Datal _Z4 | Data2_X4 | Data2_Y4 | Data2_Z4 |
| ... | ... | ... | ... | ... | ... | ... |
| 35 | Data1_X35 | Data1_Y35 | Data1_Z35 | Data2_X35 | Data2_Y35 | Data2 Z35 |

In Table 1 above, Data1_X1 to Data1 _X35 may represent magnetic force values 1111 sensed for respective screen lengths extending from an x-axis among sensing axes of the first Hall sensor. Data1_Y1 to Data1_Y35 may represent magnetic force values 1112 sensed for respective screen lengths extending from a y-axis among the sensing axes of the first Hall sensor. Data1_Z1 to Data1_Z35 may represent magnetic force values 1113 sensed for respective screen lengths extending from a z-axis among the sensing axes of the first Hall sensor. Also, Data2_X1 to Data2_X35 may represent magnetic force values 1121 sensed for respective screen length extending from an x-axis among sensing axes of the second Hall sensor. Data2_Y1 to Data2_Y35 may represent magnetic force values 1122 sensed for respective screen lengths extending from a y-axis among the sensing axes of the second Hall sensor. Data2 _Z1 to Data2 _Z35 may represent magnetic force values 1123 sensed for respective screen lengths extending from a z-axis among the sensing axes of the second Hall sensor. In the example FIG. 11, a horizontal axis indicates an mm-unit extended screen length, and a vertical axis indicates an mT-unit magnetic force sensed by each Hall sensor. In the example, also illustrated are first sensed magnetic force information 1110 obtained through the first Hall sensor and second sensed magnetic force information 1120 obtained through the second Hall sensor.

The electronic device may store, as the reference magnetic force information, magnetic force values collected while the magnet is moving from a point corresponding to the minimum length to a point corresponding to the maximum length without a physical interruption as illustrated in Table 1 above. The reference magnetic force information may include reference magnetic force values required to be sensed for each extended screen length by each Hall sensor. For example, the reference magnetic force information may be obtained through calibration during manufacturing in a factory. The reference magnetic force information obtained through such factory calibration may be corrected according to a user environment. For example, the electronic device may update the reference magnetic force information with sensed magnetic force values that are newly collected while the motor is completely driven without interruption even during actual use. Accordingly, the electronic device may compensate for an influence of a magnetic body in the user environment. The update of the reference magnetic force information will be described in detail below with reference to FIG. 12.

The electronic device may determine an extended screen length matching the sensed magnetic force information measured in real time from the reference magnetic force information indicated in Table 1 above. For example, the electronic device may find an extended length indicated by a set of magnetic force values that has a smallest difference from the sensed magnetic force information among sets of magnetic force values (e.g., sets of magnetic force values defined for respective sensing axes of the first Hall sensor and the second Hall sensor with respect to a single extended length) in the reference magnetic force information. Even when the extended screen length is changed by at least one of driving of the motor and an external force by a user, the electronic device may estimate the extended screen length based on the matching between the reference magnetic force information and the sensed magnetic force information.

For example, as illustrated in FIG. 11, there may be peaks 1190 at predetermined points in a movement range of the magnet. For example, as illustrated in FIG. 11, the peaks 1190 may be shown in a magnetic force pattern along a z-axis of the first Hall sensor and a magnetic force pattern along a z-axis of the second Hall sensor. A peak may also be referred to as an inflection point. A peak may be detected at a point where one end of the magnet and a Hall sensor are positioned on the same line perpendicular to a screen plane. In the example of FIG. 11, since both ends of the magnet have different polarities and there are two Hall sensors, there may be four peaks.

When the predefined peaks 1190 are not detected, the electronic device may determine that an external magnet is adjacent to the electronic device. The electronic device may allow a user to do an action for accurately measuring an extended screen length by providing the user with a guidance that guides the user to remove the external magnet and move away from the external magnet. In addition, although it has been described above that the reference magnetic force information is updated when the motor is completely driven without interruption, the electronic device may defer updating the reference magnetic force information when at least one of the predefined peaks 1190 is not detected. For example, even when the magnet moves from the point corresponding to the minimum length to the point corresponding to the maximum length through the rotational driving of the motor without interruption, at least one of the predefined peaks 1190 may not be detected among magnetic force values collected during the movement of the magnet. In this case, although there is no interruption in the movement of the magnet, there may be a possibility that sensing by a Hall sensor is disturbed by an external magnetic force. In response to the absence of at least one of the predefined peaks 1190 from the magnetic force values collected during the movement of the magnet, the electronic device may discard corresponding magnetic force values without using them for updating the reference magnetic force information.

FIG. 12 is a flowchart illustrating a detailed example method of determining an extended screen length of a display screen according to an embodiment.

Operations 1230 through 1251 to be described below with reference to FIG. 12 may be performed by a processor (e.g., the processor 120 of FIG. 1) of an electronic device (e.g., the electronic device 101 of FIG. 1).

According to an embodiment, when estimation based on motor driving information is available, the electronic device (e.g., the electronic device 101 of FIG. 1) may determine an extended length estimated based on the motor driving information to be an extended screen length of a display screen. Conversely, when the estimation based on the motor driving information is unavailable, the electronic device may determine an extended length estimated based on sensed magnetic force information to be the extended screen length of the display screen.

For example, in operation 1231, the electronic device may determine whether there is an error in the estimation based on driving of a motor. As described above, the electronic device may calculate a second extended screen length based on the number of rotations of the motor (e.g., the number of rotations obtained using an encoder or a step count of a step motor) and a transfer length per unit rotation that are included in the motor driving information. In addition, the electronic device may calculate a first extended length based on the sensed magnetic force information. The electronic device may determine whether there is an error occurring between the first extended length and the second extended length. For example, the electronic device may determine whether the error between the first extended length and the second extended length exceeds a threshold error. Accordingly, the electronic device may monitor an occurrence of an error by at least some of an idle gear rotation, an accumulated error, a forced stoppage during an operation by a user, and an artificial change in screen length by the user.

In operation 1232, when the error between the first extended length and the second extended length is less than or equal to the threshold error, the electronic device may use the second extended length based on the motor driving information. For example, when a difference between the first extended length and the second extended length is not great, the electronic device may determine the extended screen length of the display screen by using the motor driving information.

In operation 1233, when the error between the first extended length and the second extended length is greater than or equal to the threshold error, the electronic device may use the first extended length based on the sensed magnetic force information. Accurate estimation of the extended screen length may not be performed only using the motor driving information due to various factors (e.g., operational malfunction of the motor and forced length change by the user). As described above, when detecting the error in the estimation based on the motor driving information, the electronic device may determine, to be the extended screen length of the display screen, the extended length estimated based on the sensed magnetic force information that is based on a position of the magnet interworking with the change in the screen length.

According to an embodiment, when detecting the error between the first extended length calculated based on the sensed magnetic force information and the second extended length calculated based on the motor driving information, the electronic device may output information notifying the error through a display module. Even when the motor rotates, there may be a difference occurring between an extended length predicted by the rotation of the motor and an actual extended length of the display screen due to an abnormal situation including, for example, physical jamming or deviation of a rolling gear. As described above, the electronic device may detect the error in the estimation performed based on the motor driving information, based on the estimation performed based on the sensed magnetic force information. The electronic device may notify the user of the error through a user interface (UI), thereby guiding the user to improve it.

In operation 1234, the electronic device may determine whether the motor is completely driven. The electronic device may determine the complete driving of the motor to be successful when the display screen extends to a specified target length. For example, the electronic device may attempt to rotate the motor by a target number of rotations corresponding to the target length. In this example, when a stall is not detected until the motor rotates by the target number of rotations, the electronic device may determine the complete driving to be successful. However, when the stall is detected before the number of rotations of the motor reaches the target number of rotations, the electronic device may determine the complete driving to be unsuccessful. For example, when a length change is suspended by an external force before the length of the display screen is changed to the target length during the rotational driving, the electronic device may determine the extended screen length based on the detection of the stall in the motor. The electronic device may determine a time point at which the motor stops by detecting the stall based on a current flowing in the motor. The detection of the stall has been described above with reference to FIG. 1. When the stall occurs before the number of rotations reaches the target number of rotations, the electronic device may determine the extended screen length based on the sensed magnetic force information in operation 1233. For example, when the driving of the motor is successful without the stall, the electronic device may use the extended length estimated based on the motor driving information.

In addition, when the target length is set to be a maximum length and the complete driving of the motor is successful during a time from a point corresponding to a minimum length to a point corresponding to the maximum length, the electronic device may perform automatic calibration on reference magnetic force information. The electronic device may record magnetic force values for each extended screen length while a housing (e.g., a first housing) is moving to change a screen size of the display screen by the rotational driving of the motor. The electronic device may at least temporarily store the measured magnetic force values measured each time. When the screen length extending along an x-axis of the display screen extends from the minimum length to the maximum length without a stoppage (e.g., an abnormal jam before the maximum length is reached) by the rotational driving of the motor, the electronic device may update the magnetic force values recorded for each extended screen length in the reference magnetic force information. In addition, when contracting the screen length from the maximum length to the minimum length without interruption, the electronic device may also update the reference magnetic force information.

For example, in operation 1241, the electronic device may determine whether a pattern difference is present between the recorded magnetic force values and previous magnetic force information. When the pattern difference between the recorded magnetic force values and the previous reference magnetic force information is greater than or equal to a threshold difference, the electronic device may update the reference magnetic force information with the recorded magnetic force values. The magnetic force values collected while the length extending along the x-axis on the display screen of the electronic device is extending from the minimum length to the maximum length without stoppage may have a magnetic force pattern (e.g., the pattern illustrated in FIG. 11). That a shape of a magnetic force pattern collected during the extension up to the maximum length is changed may indicate a change in at least one of a state of components of the electronic device (e.g., a change in strength of an embedded magnet and in sensitivity of a Hall sensor) or a magnetic environment around the electronic device. The estimation based on the previous reference magnetic force information may include an error due to a change in the component state and/or the magnetic environment. The pattern difference between the recorded magnetic force values and the previous reference magnetic force information may be, for example, a sum of differences between respective recorded magnetic force values for extended lengths and corresponding previous reference values. However, the pattern difference is not limited thereto, and the pattern difference may be a difference between the recorded magnetic force values and the previous reference magnetic force information (e.g., Euclidean distance and cosine similarity). Alternatively, various indicators indicating a curve difference or curve similarity of the shape of the magnetic force pattern may be used. For example, when the pattern difference between the recorded magnetic force values and the previous reference magnetic force information is less than or equal to the threshold difference, the electronic device may continue to use the extended length estimated based on the motor driving information in operation 1232.

In operation 1242, when the pattern difference between the recorded magnetic force values and the previous reference magnetic force information exceeds the threshold difference, the electronic device may update the reference magnetic force information. As described above, the electronic device may record magnetic force values collected through sensing by each Hall sensor during the complete driving of the motor. When there is the pattern difference, the electronic device may update the reference magnetic force information by replacing the magnetic force values of the previous reference magnetic force information with new magnetic force values. Accordingly, the electronic device may correct the reference magnetic force information as shown in Table 1 above while driving the device by using information collected when the motor is successfully driven without an abnormal operation.

The electronic device may estimate an extended screen length matching the sensed magnetic force information by using the new reference magnetic force information updated after the reference magnetic force information is updated.

In operation 1251, when driving the electronic device, the electronic device may determine, to be a start length, the extended screen length determined based on the sensed magnetic force information. The start length may be a reference length for the estimation performed based on the motor driving information, and the electronic device may determine the extended screen length by applying, to the start length, an increment and/or decrement estimated from the motor driving information.

For example, while power of the electronic device is turned off, the screen length (e.g., the extended length) extending along the x-axis of the display screen may be changed by an external force (e.g., a manual operation by a user) without the driving of the motor. The extended length may change while the power supply to the motor is suspended, and thus the estimation performed using the motor driving information may be unavailable. The electronic device may determine the extended screen length based on matching between the sensed magnetic force information and the pre-stored reference magnetic force information even without the driving of the motor during initial startup and/or restart. The electronic device may determine the extended screen length immediately at a point in time at which the power is turned on, and thus the electronic device may fit, to the display screen, a content (e.g., an application and a video) corresponding to the extended screen length at the point in time, and provide the fit content. For example, immediately after being rebooted, the electronic device may output the content corresponding to a size of an extended viewable area.

In operation 1252, the electronic device may increase or decrease the extended screen length based on the start length. For example, when the rotational driving of the motor occurs after the point in time at which the power of the electronic device is turned on, the electronic device may determine a screen length additionally changed based on the start length, based on the motor driving information. For example, when the power is turned on after the user manually moves the housing to adjust the display screen of the display module while the power of the electronic device is turned off, the electronic device may set, to be the start length, an extended length recognized based on the sensed magnetic force information. The electronic device may accurately determine the extended screen length by applying an increment and/or decrement from a set start position based on the number of rotations of the motor.

According to an embodiment, the electronic device may calculate a contractable length that may contract from the start length to the minimum length (e.g., 0 mm) and an extendable length that may extend from the start length to the maximum length (e.g., 4a mm) for the display screen of the display module. For example, when the start length is b mm (herein, b is a real number), the electronic device may calculate the contractable length to be b mm and the extendable length to be (4a-b) mm. The electronic device may limit a range of the number of rotations of the motor based on at least one of the contractable length or the extendable length.

Although an example of determining the start length at the restart of the electronic device based on the sensed magnetic force information has been described above in connection with operation 1251, examples are not limited thereto. For example, when the screen length is changed by a force other than the driving of the motor (e.g., an external force applied by the user) while the electronic device is operating, the electronic device may correct the estimation of the extended screen length based on the sensed magnetic force information. For example, the electronic device may determine, to be the extended screen length of the display screen, an extended length estimated based on matching between the sensed magnetic force information and the reference magnetic force information.

In addition, although an example of using the extended length based on the sensed magnetic force information when an error occurs and notifying the user of the occurrence of the error has been described above in connection with operation 1233, examples are not limited thereto. For example, the electronic device may determine a failure level based on an extended distance (e.g., the extended length) estimated based on the sensed magnetic force information and on the motor driving information. When a usage time has elapsed, the electronic device may fail to extend or contract to a desired target length with a force set at an initial stage of a product (e.g., a time at which the product is manufactured in a factory and released from the factory). This may be because, due to wear by the usage (e.g., mechanical wear, and electrical and electronic wear), driving and controlling corresponding to a desired distance displacement may not be easy even when the same force is applied by the motor. To change the screen length by the desired target length, the electronic device may adjust a controller of the motor.

According to an embodiment, when detecting the error between the first extended length calculated based on the sensed magnetic force information and the second extended length calculated based on the motor driving information, the electronic device may change an electrical signal to be applied to the motor to change a rotational torque of the motor. For example, when the second extended length is shorter than the first extended length, the electronic device may increase the rotational torque of the motor. **In** this example, the electronic device may increase the strength (e.g., current magnitude) of the electrical signal to be applied to the motor and/or the number of electrical pulses. For another example, when the second extended length is longer than the first extended length, the electronic device may decrease the rotational torque of the motor. The electronic device may reduce the strength of the electrical signal to be applied to the motor and/or the number of electrical pulses.

When, although the controller of the motor is adjusted, the failure level worsens as the wear progresses, reaching the desired target length may not be possible only by controlling the electrical signal. For example, when detecting an error between the first extended length and the second extended length even after changing the electrical signal to be applied to the motor as described above, the electronic device may notify the user of a failure of the motor. Accordingly, when the failure level exceeds an electrically controllable level, the electronic device may provide the notification of the failure to the user to suggest the user for repairing a product.

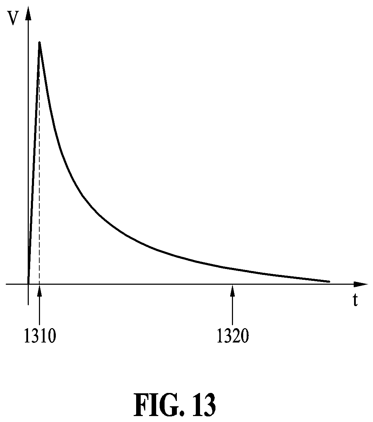

FIG. 13 is a diagram illustrating an example of controlling a driving speed of a motor according to an embodiment.

According to an embodiment, an electronic device (e.g., the electronic device 101 of FIG. 1) may adjust a driving speed of a motor while a housing is moving to extend or contract a display screen. In a graph shown in FIG. 13, a vertical axis may indicate a rotational speed of the motor, and a horizontal axis may indicate time. For example, when changing the display screen up to a target length, the electronic device may start rotational driving of the motor at a first rotational speed. As illustrated in FIG. 13, at an initial time 1310, the electronic device may change a size of the display screen by driving the motor at the first rotational speed to move the housing. Before reaching the target length, the electronic device may change a speed of the rotational driving to a second rotational speed different from the first rotational speed. For example, at a subsequent time 1320 after the initial time 1310, the electronic device may change a moving speed of the housing for changing the size of the display screen by driving the motor at the second rotational speed. For example, during the movement of the housing for changing the length of the display screen, the electronic device may reduce the rotational speed of the motor to the second rotational speed that is lower than the first rotational speed. The electronic device may gradually reduce the rotational speed of the motor until an end of driving the motor from a start of driving the motor.

Accordingly, as compared to a comparative embodiment of rotating the motor at a constant speed for the same time, the electronic device may change the size of the display screen temporarily at a high speed at an initial time, and then reduce the speed later, thereby allowing a user to recognize that the display screen extends or contracts relatively rapidly. As illustrated, this is because a rate at which the screen size is changed at the initial time 1310 is greater than a rate at which the screen size is changed at the subsequent time 1320.

In addition, the electronic device may estimate a length changed during the rotational driving performed at the first rotational speed based on the motor driving information, and may estimate a length changed during the rotational driving performed at the second rotational speed based on the sensed magnetic force information. In an interval where a force is applied initially, friction to resist may be slight, and inertia by an instantaneous torque may be corrected by Hall sensor-based estimation. Accordingly, the electronic device may relieve an internal impact that may be caused by a sudden stoppage while stably extending or contracting the screen by the target length. For example, the electronic device may minimize internal damage while reducing time consumed to increase or decrease the screen size the through the control of the speed of the motor as described above.

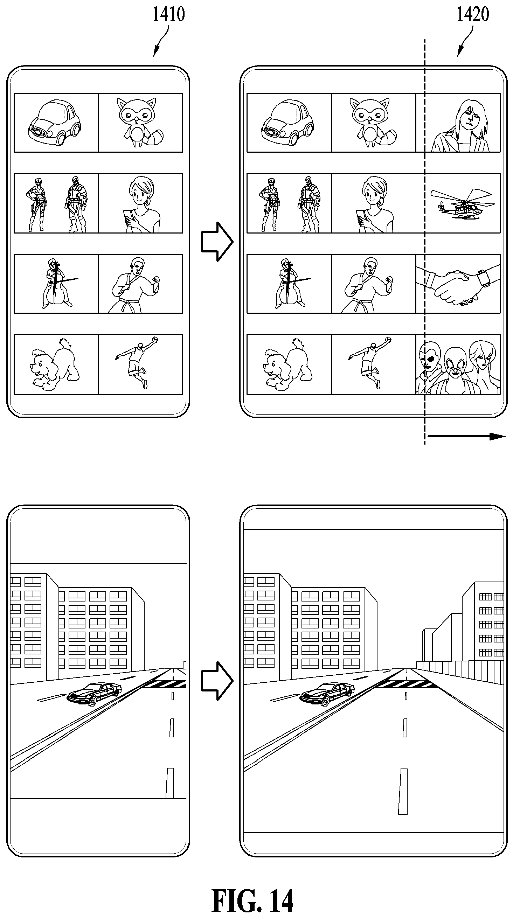

FIG. 14 is a diagram illustrating an example output content adjusted in response to an extended screen length according to an embodiment.

According to an embodiment, an electronic device (e.g., the electronic device 101 of FIG. 1) may determine screen information including at least one of a size and an aspect ratio of a display screen based on an extended screen length. The electronic device may fit a content to the display screen and output the fit content based on the determined screen information. FIG. 14 illustrates an example content 1410 output on the display screen before extending and an example content 1420 output on the display screen after extending.

For example, when the display screen extends during the execution of an application, the electronic device may increase a display area occupied by the application. The electronic device may provide a screen of a first resolution (e.g., 1440x3440 resolution) in a normal mode (e.g., a mode in which the extended screen length is a minimum length), and provide a screen of a second resolution (e.g., 2016x3440 resolution) in an extended mode (e.g., a mode in which the extended screen length is a maximum length). The second resolution may have a greater number of pixels on an axis corresponding to an x-axis than the first resolution.

However, the resolution is not limited to the foregoing example. The electronic device may determine the number of pixels of a length corresponding to the x-axis of the screen (e.g., the number of pixels on a horizontal axis) to be within a range between the number of pixels of the first resolution on the x-axis and the number of pixels of the second resolution on the x-axis (e.g., a range between 1440 or more and 2016 or less), according to the application. The electronic device may adjust the screen length extending along the x-axis of the display screen to be the target length corresponding to a screen scale determined based on the application and/or content through driving of the motor. Conversely, the electronic device may adjust the screen scale of the application and/or content based on the length on the x-axis of the display screen. Accordingly, the electronic device may prevent an output error of the application and/or content (e.g., providing a cut portion or an area not displayed).

For another example, a horizontal resolution may be 1440 in a contracted state where the electronic device contracts to the minimum length, and may be 2016 in an extended state where the electronic device extends to the maximum length. The electronic device may extend the display screen to a screen size of a horizontal resolution (e.g., 1600) set by a user or requested by an application. For example, when the horizontal resolution of the screen size requested by the application is 1600, the electronic device may request to control the horizontal resolution of the display screen to 1600 when executing the application or playing an image in the application. The electronic device may extend the screen by controlling the motor based on the requested horizontal resolution. The electronic device may not draw a content of a portion that exceeds the horizontal resolution of 1440, in the contracted state where the electronic device contracts to the minimum length. However, as described above, the electronic device may prepare and output a content having the horizontal resolution of 1600 in advance while driving the motor to extend the display screen up to a target length corresponding to the requested horizontal resolution. For example, the electronic device may draw in advance the content having the horizontal resolution of 1600 before the extension of the display screen is completed.

Conversely, when contracting the display screen from the maximum length to the minimum length, the electronic device may drive the motor to hide the display screen exposed on the front surface. When the horizontal resolution is determined to be 1600, the electronic device may resize and redraw the screen. The electronic device may redraw the screen exposed by the extended screen length estimated in real time during the driving of the motor for which the length is reduced from the maximum length to the minimum length. Accordingly, the electronic device may minimize the provision of the screen in which a portion is cut or rescaled to the user. For example, after the horizontal resolution of the display screen is reduced from 2016 to 1600, the electronic device may reduce unnecessary current consumption by reducing an area to which a current is to be applied in the display module as described above with reference to FIG. 9.

The electronic device may naturally display a content regardless of extension or contraction of the display screen in terms of user experience (UX). In addition, the electronic device may be set to the normal mode (e.g., the mode corresponding to the minimum length), the extended mode (e.g., the mode corresponding to the maximum length), and another mode corresponding to a specified size in the middle between those corresponding to the normal mode and the extended mode. The electronic device may provide a visual representation (e.g., a graphical user interface (GUI) effect) according to the extended screen length during a transition in which the size of the display screen is increased or decreased.

According to an embodiment, an electronic device may dynamically adjust the size, shape, and arrangement of an application and/or content while the size of a display screen is changed by a movement of a housing. For example, when the screen extends, the electronic device may further display additional information (e.g., a hidden screen and/or additional content) corresponding to a portion hidden before the extension. For another example, while outputting a content of which a shape changes as the screen extends, the electronic device may match, in real time, the size of an area of the display screen and the size of an output area occupied by the content. For example, as illustrated in FIG. 14, when the screen elongates on a horizontal axis while a photo is being displayed, the electronic device may fill the screen by enlarging the photo in response to the elongated screen.

While the disclosure has been illustrated and described with reference to various embodiments, it will be understood that the various embodiments are intended to be illustrative, not limiting. It will further be understood by those skilled in the art that various changes in form and detail may be made without departing from the full scope of the disclosure, including the appended claims. It will also be understood that any of the embodiment(s) described herein may be used in conjunction with any other embodiment(s) described herein.

## Claims

1. An electronic device (100, 200, 400), comprising:
a display module (160) comprising a display screen viewed on one side;
a motor (440) configured to perform (1010) one of an operation of increasing a size of the display screen and an operation of decreasing the size of the display screen, by moving a housing (210, 220, 410, 420) connected to the display module through rotational driving;
one or more Hall sensors (176, 450) configured to sense (1020) a magnetic force by a magnet moving in response to a change in the size of the display screen according to the movement of the housing (210, 220, 410, 420) by the rotational driving;
a memory (130) configured to store therein computer-executable instructions; and
a processor (120) configured to access the memory (130) and execute the instructions,
wherein, when executed by the processor (120), the instructions cause the electronic device (100, 200, 400) to:
determine (1030) a first extended length of the display screen based on sensed magnetic force information that is generated through magnetic force sensing performed using the one or more Hall sensors (176, 450),
determine (1030) a second extended length of the display screen based on motor driving information that is based on the rotational driving of the motor (440),
detect an error between the first extended length and the second extended length,
change an electrical signal to be applied to the motor (440) to change a rotational torque of the motor (440) based on the first extended length and the second extended length when detecting the error,
determine (1231) that the motor driving information is unavailable when the detected error is greater than or equal to a threshold error, and
determine (1233) an extended screen length of the display screen by using the first extended length when the motor driving information is unavailable.

2. The electronic device (100, 200, 400) of claim 1, wherein the magnet is arranged to be movable along one axis while the housing (210, 220, 410, 420) is moving to change the screen size of the display screen, and
the one or more Hall sensors (176, 450) comprise a plurality of Hall sensors (176, 450) spaced apart along an axis parallel to the axis along which the magnet is movable inside the electronic device (100, 200, 400).

3. The electronic device (100, 200, 400) of claim 1 or 2, wherein, when executed by the processor, the instructions cause the electronic device (100, 200, 400) further to:
when estimation based on the motor driving information is unavailable, estimate the extended screen length based on matching between the sensed magnetic force information and pre-stored reference magnetic force information.

4. The electronic device (100, 200, 400) of claim 1 or 2, wherein, when executed by the processor, the instructions cause the electronic device (100, 200, 400) further to:
record a magnetic force value for each screen length extended while the housing (210, 220, 410, 420) is moving to change the size of the display screen by the rotational driving of the motor (440),
when the extended screen length of the display screen extends from a minimum length to a maximum length by the rotational driving of the motor (440) without a stoppage, update the magnetic force value recorded for each extended screen length to reference magnetic force information; and
estimate an extended screen length matching the sensed magnetic force information using the reference magnetic force information after updating the reference magnetic force information.

5. The electronic device (100, 200, 400) of claim 4, wherein, when executed by the processor, the instructions cause the electronic device (100, 200, 400) further to:
when a pattern difference between the recorded magnetic force value and previous reference magnetic force information is greater than or equal to a threshold difference, update the reference magnetic force information with the recorded magnetic force value,

6. The electronic device (100, 200, 400) of any of claims 1 to 5, wherein, when executed by the processor, the instructions cause the electronic device (100, 200, 400) further to:
determine the extended screen length based on the number of rotations of the motor (440) and a transfer length per unit rotation that are included in the motor driving information.

7. The electronic device (100, 200, 400) of any of claims 1 to 6, wherein, when executed by the processor, the instructions cause the electronic device (100, 200, 400) further to:
when a change in the length stops by an external force before a length of the display screen is changed to a target length during the rotational driving, determine the extended screen length based on stall detection in the motor (440).

8. The electronic device (100, 200, 400) of any of claims 1 to 7, wherein, when executed by the processor, the instructions cause the electronic device (100, 200, 400) further to:
when changing the display screen to a target length, start the rotational driving of the motor (440) at a first rotational speed;
before reaching the target length, change a rotational speed for the rotational driving to a second rotational speed different from the first rotational speed; and
estimate a length changed during the rotational driving at the first rotational speed based on the motor driving information, and estimate a length changed during the rotational driving at the second rotational speed based on the sensed magnetic force information.

9. The electronic device (100, 200, 400) of claim 8, wherein, when executed by the processor, the instructions cause the electronic device (100, 200, 400) further to:
reduce the rotational speed of the motor (440) to the second rotational speed less than the first rotational speed during the movement of the housing (210, 220, 410, 420) for changing a length of the display screen.

10. The electronic device (100, 200, 400) of any of claims 1 to 9, wherein, when executed by the processor, the instructions cause the electronic device (100, 200, 400) further to:
when driving the electronic device (100, 200, 400), determine, as a start length, the extended screen length determined based on the sensed magnetic force information.

11. The electronic device (100, 200, 400) of claim 10, wherein, when executed by the processor, the instructions cause the electronic device (100, 200, 400) further to:
when the rotational driving of the motor (440) occurs, determine a length additionally changed based on the start length, based on the motor driving information.

12. The electronic device (100, 200, 400) of claim 10, wherein, when executed by the processor, the instructions cause the electronic device (100, 200, 400) further to:
calculate a contractable length that is contractable from the start length to a minimum length and an extendable length that is extendable from the start length to a maximum length.

13. The electronic device (100, 200, 400) of claim 12, wherein, when executed by the processor, the instructions cause the electronic device (100, 200, 400) further to:
limit a range of the number of rotations of the motor (440) based on at least one of the contractable length or the extendable length.

14. A method implemented by a processor, comprising:
performing (1010) one of increasing a size of a display screen viewed on one side of a display module and decreasing the size of the display screen, by moving a housing (210, 220, 410, 420) connected to the display module through rotational driving of a motor (440);
sensing (1020), by one or more Hall sensors (176, 450), a magnetic force by a magnet moving in response to a change in the size of the display screen according to the movement of the housing (210, 220, 410, 420) by the rotational driving;
determining (1030) a first extended length of the display screen based on sensed magnetic force information that is generated through magnetic force sensing performed using the one or more Hall sensors (176, 450);
determining (1030) a second extended length of the display screen based on motor driving information that is based on the rotational driving of the motor (440);
detecting an error between the first extended length and the second extended length;
changing an electrical signal to be applied to the motor (440) to change a rotational torque of the motor (440) based on the first extended length and the second extended length when detecting the error;
determining (1231) that the motor driving information is unavailable when the detected error is greater than or equal to a threshold error; and
determining (1233) an extended screen length of the display screen by using the first extended length when the motor driving information is unavailable.

15. A non-transitory computer-readable storage medium storing instructions that, when executed by a processor, cause the processor to perform the method of claim 14.

## Patentansprüche

1. Elektronisches Gerät (100, 200, 400), umfassend:
ein Anzeigemodul (160) mit einem auf einer Seite betrachteten Anzeigebildschirm;
einen Motor (440), der dazu konfiguriert ist, eine von einer Operation zum Vergrößern einer Größe des Anzeigebildschirms und einer Operation zum Verkleinern der Größe des Anzeigebildschirms durchzuführen (1010), indem er ein mit dem Anzeigemodul verbundenes Gehäuse (210, 220, 410, 420) durch Drehantrieb bewegt;
einen oder mehrere Hall-Sensoren (176, 450), die dazu konfiguriert sind, eine Magnetkraft durch einen Magneten zu erfassen (1020), der sich als Reaktion auf eine Änderung der Größe des Anzeigebildschirms entsprechend der Bewegung des Gehäuses (210, 220, 410, 420) durch den Drehantrieb bewegt;
einen Speicher (130), der dazu konfiguriert ist, darin computerausführbare Befehle zu speichern; und
einen Prozessor (120), der dazu konfiguriert ist, auf den Speicher (130) zuzugreifen und die Befehle auszuführen,
wobei die Befehle, wenn sie vom Prozessor (120) ausgeführt werden, das elektronische Gerät (100, 200, 400) dazu veranlassen:
eine erste erweiterte Länge des Anzeigebildschirms auf der Grundlage von erfassten Magnetkraftinformationen zu bestimmen (1030), die durch eine unter Verwendung des einen oder der mehreren Hall-Sensoren (176, 450) durchgeführte Magnetkrafterfassung erzeugt werden,
eine zweite erweiterte Länge des Anzeigebildschirms auf der Grundlage von Motorantriebsinformationen zu bestimmen (1030), die auf dem Drehantrieb des Motors (440) basieren,
einen Fehler zwischen der ersten erweiterten Länge und der zweiten erweiterten Länge zu erfassen,
ein an den Motor (440) anzuwendendes elektrisches Signal zu ändern, um ein Drehmoment des Motors (440) auf der Grundlage der ersten erweiterten Länge und der zweiten erweiterten Länge zu ändern, wenn der Fehler erfasst wird,
festzustellen (1231), dass die Motorantriebsinformationen nicht verfügbar sind, wenn der erfasste Fehler größer oder gleich einem Schwellenfehler ist, und
eine erweiterte Bildschirmlänge des Anzeigebildschirms unter Verwendung der ersten erweiterten Länge zu bestimmen (1233), wenn die Motorantriebsinformationen nicht verfügbar sind.

2. Elektronisches Gerät (100, 200, 400) nach Anspruch 1, wobei der Magnet so angeordnet ist, dass er entlang einer Achse beweglich ist, während sich das Gehäuse (210, 220, 410, 420) bewegt, um die Bildschirmgröße des Anzeigebildschirms zu ändern, und
wobei der eine oder die mehreren Hall-Sensoren (176, 450) eine Vielzahl von Hall-Sensoren (176, 450) umfassen, die entlang einer Achse parallel zu der Achse, entlang der der Magnet innerhalb des elektronischen Geräts (100, 200, 400) beweglich ist, voneinander beabstandet sind.

3. Elektronisches Gerät (100, 200, 400) nach Anspruch 1 oder 2, wobei die Befehle, wenn sie vom Prozessor ausgeführt werden, das elektronische Gerät (100, 200, 400) ferner dazu veranlassen:
wenn eine Schätzung auf der Grundlage der Motorantriebsinformationen nicht verfügbar ist, die erweiterte Bildschirmlänge auf der Grundlage eines Abgleichs zwischen den erfassten Magnetkraftinformationen und zuvor gespeicherten Referenzmagnetkraftinformationen zu schätzen.

4. Elektronisches Gerät (100, 200, 400) nach Anspruch 1 oder 2, wobei die Befehle, wenn sie vom Prozessor ausgeführt werden, das elektronische Gerät (100, 200, 400) ferner dazu veranlassen:
einen Magnetkraftwert für jede Bildschirmlänge aufzuzeichnen, die sich erweitert, während sich das Gehäuse (210, 220, 410, 420) bewegt, um die Größe des Anzeigebildschirms durch den Drehantrieb des Motors (440) zu ändern,
wenn sich die erweiterte Bildschirmlänge des Anzeigebildschirms durch den Drehantrieb des Motors (440) ohne Unterbrechung von einer Mindestlänge auf eine Höchstlänge erweitert, den für jede erweiterte Bildschirmlänge aufgezeichneten Magnetkraftwert auf Referenzmagnetkraftinformationen zu aktualisieren; und
nach dem Aktualisieren der Referenzmagnetkraftinformationen eine erweiterte Bildschirmlänge, die mit den erfassten Magnetkraftinformationen übereinstimmt, unter Verwendung der Referenzmagnetkraftinformationen zu schätzen.

5. Elektronisches Gerät (100, 200, 400) nach Anspruch 4, wobei die Befehle, wenn sie vom Prozessor ausgeführt werden, das elektronische Gerät (100, 200, 400) ferner dazu veranlassen:
wenn eine Musterdifferenz zwischen dem aufgezeichneten Magnetkraftwert und früheren Referenzmagnetkraftinformationen größer oder gleich einer Schwellendifferenz ist, die Referenzmagnetkraftinformationen mit dem aufgezeichneten Magnetkraftwert zu aktualisieren.

6. Elektronisches Gerät (100, 200, 400) nach einem der Ansprüche 1 bis 5, wobei die Befehle, wenn sie vom Prozessor ausgeführt werden, das elektronische Gerät (100, 200, 400) ferner dazu veranlassen:
die erweiterte Bildschirmlänge auf der Grundlage der Anzahl von Umdrehungen des Motors (440) und einer Übertragungslänge pro Umdrehungseinheit, die in den Motorantriebsinformationen enthalten sind, zu bestimmen.

7. Elektronisches Gerät (100, 200, 400) nach einem der Ansprüche 1 bis 6, wobei die Befehle, wenn sie vom Prozessor ausgeführt werden, das elektronische Gerät (100, 200, 400) ferner dazu veranlassen:
wenn eine Änderung der Länge durch eine externe Kraft gestoppt wird, bevor eine Länge des Anzeigebildschirms während des Drehantriebs auf eine Ziellänge geändert wird, die erweiterte Bildschirmlänge auf der Grundlage einer Stillstandserfassung im Motor (440) zu bestimmen.

8. Elektronisches Gerät (100, 200, 400) nach einem der Ansprüche 1 bis 7, wobei die Befehle, wenn sie vom Prozessor ausgeführt werden, das elektronische Gerät (100, 200, 400) ferner dazu veranlassen:
beim Ändern des Anzeigebildschirms auf eine Ziellänge den Drehantrieb des Motors (440) bei einer ersten Drehzahl zu starten;
vor Erreichen der Ziellänge eine Drehzahl für den Drehantrieb auf eine zweite Drehzahl zu ändern, die sich von der ersten Drehzahl unterscheidet; und
eine während des Drehantriebs bei der ersten Drehzahl geänderte Länge auf der Grundlage der Motorantriebsinformationen zu schätzen und eine während des Drehantriebs bei der zweiten Drehzahl geänderte Länge auf der Grundlage der erfassten Magnetkraftinformationen zu schätzen.

9. Elektronisches Gerät (100, 200, 400) nach Anspruch 8, wobei die Befehle, wenn sie vom Prozessor ausgeführt werden, das elektronische Gerät (100, 200, 400) ferner dazu veranlassen:
die Drehzahl des Motors (440) während der Bewegung des Gehäuses (210, 220, 410, 420) zum Ändern einer Länge des Anzeigebildschirms auf die zweite Drehzahl zu reduzieren, die geringer ist als die erste Drehzahl.

10. Elektronisches Gerät (100, 200, 400) nach einem der Ansprüche 1 bis 9, wobei die Befehle, wenn sie vom Prozessor ausgeführt werden, das elektronische Gerät (100, 200, 400) ferner dazu veranlassen:
beim Ansteuern des elektronischen Geräts (100, 200, 400) die auf der Grundlage der erfassten Magnetkraftinformationen bestimmte erweiterte Bildschirmlänge als Startlänge zu bestimmen.

11. Elektronisches Gerät (100, 200, 400) nach Anspruch 10, wobei die Befehle, wenn sie vom Prozessor ausgeführt werden, das elektronische Gerät (100, 200, 400) ferner dazu veranlassen:
wenn der Drehantrieb des Motors (440) erfolgt, eine auf der Grundlage der Startlänge zusätzlich geänderte Länge auf der Grundlage der Motorantriebsinformationen zu bestimmen.

12. Elektronisches Gerät (100, 200, 400) nach Anspruch 10, wobei die Befehle, wenn sie vom Prozessor ausgeführt werden, das elektronische Gerät (100, 200, 400) ferner dazu veranlassen:
eine zusammenziehbare Länge, die von der Startlänge auf eine Mindestlänge zusammenziehbar ist, und eine ausziehbare Länge, die von der Startlänge auf eine Höchstlänge ausziehbar ist, zu berechnen.

13. Elektronisches Gerät (100, 200, 400) nach Anspruch 12, wobei die Befehle, wenn sie vom Prozessor ausgeführt werden, das elektronische Gerät (100, 200, 400) ferner dazu veranlassen:
einen Bereich der Anzahl von Umdrehungen des Motors (440) auf der Grundlage mindestens einer von der zusammenziehbaren Länge und der ausziehbaren Länge zu begrenzen.

14. Von einem Prozessor implementiertes Verfahren, umfassend:
Durchführen (1010) eines von Folgendem: Vergrößern einer Größe eines auf einer Seite eines Anzeigemoduls betrachteten Anzeigebildschirms und Verkleinern der Größe des Anzeigebildschirms durch Bewegen eines mit dem Anzeigemodul verbundenen Gehäuses (210, 220, 410, 420) durch Drehantrieb eines Motors (440);
Erfassen (1020) einer Magnetkraft durch einen oder mehrere Hall-Sensoren (176, 450), die durch einen Magneten erzeugt wird, der sich in Reaktion auf eine Änderung der Größe des Anzeigebildschirms entsprechend der Bewegung des Gehäuses (210, 220, 410, 420) durch den Drehantrieb bewegt;
Bestimmen (1030) einer ersten erweiterten Länge des Anzeigebildschirms auf der Grundlage von erfassten Magnetkraftinformationen, die durch eine unter Verwendung des einen oder der mehreren Hall-Sensoren (176, 450) durchgeführte Magnetkrafterfassung erzeugt werden;
Bestimmen (1030) einer zweiten erweiterten Länge des Anzeigebildschirms auf der Grundlage von Motorantriebsinformationen, die auf dem Drehantrieb des Motors (440) basieren;
Erfassen eines Fehlers zwischen der ersten erweiterten Länge und der zweiten erweiterten Länge;
Ändern eines an den Motor (440) anzuwendenden elektrischen Signals, um ein Drehmoment des Motors (440) auf der Grundlage der ersten erweiterten Länge und der zweiten erweiterten Länge zu ändern, wenn der Fehler erfasst wird;
Feststellen (1231), dass die Motorantriebsinformationen nicht verfügbar sind, wenn der erfasste Fehler größer oder gleich einem Schwellenfehler ist; und
Bestimmen (1233) einer erweiterten Bildschirmlänge des Anzeigebildschirms unter Verwendung der ersten erweiterten Länge, wenn die Motorantriebsinformationen nicht verfügbar sind.

15. Nicht flüchtiges, computerlesbares Speichermedium, auf dem Befehle gespeichert sind, die, wenn sie von einem Prozessor ausgeführt werden, den Prozessor dazu veranlassen, das Verfahren nach Anspruch 14 durchzuführen.

## Revendications

1. Dispositif électronique (100, 200, 400) comprenant :
un module d'affichage (160) comprenant un écran d'affichage visible d'un côté ;
un moteur (440) configuré pour effectuer (1010) l'une des opérations d'augmentation d'une taille de l'écran d'affichage et de réduction de la taille de l'écran d'affichage, en déplaçant un boîtier (210, 220, 410, 420) connecté au module d'affichage par un entraînement rotatif ;
un ou plusieurs capteurs à effet Hall (176, 450) configurés pour détecter (1020) une force magnétique exercée par un aimant se déplaçant en réponse à un changement de la taille de l'écran d'affichage en fonction du mouvement du boîtier (210, 220, 410, 420) par l'entraînement rotatif ;
une mémoire (130) configurée pour stocker des instructions exécutables par ordinateur dans celle-ci ; et
un processeur (120) configuré pour accéder à la mémoire (130) et exécuter les instructions,
dans lequel les instructions, lorsqu'elles sont exécutées par le processeur (120), amènent en outre le dispositif électronique (100, 200, 400) à :
déterminer (1030) une première longueur étendue de l'écran d'affichage sur la base d'une information de force magnétique détectée qui est générée par la détection de force magnétique effectuée à l'aide de l'un ou plusieurs capteurs à effet Hall (176, 450),
déterminer (1030) une seconde longueur étendue de l'écran d'affichage sur la base d'une information d'entraînement de moteur sur la base de l'entraînement rotatif du moteur (440),
détecter une erreur entre la première longueur étendue et la seconde longueur étendue,
changer un signal électrique à appliquer au moteur (440) afin de changer un couple de rotation du moteur (440) sur la base de la première longueur étendue et de la seconde longueur étendue lors de la détection de l'erreur,
déterminer (1231) que l'information d'entraînement de moteur est indisponible lorsque l'erreur détectée est supérieure ou égale à une erreur de seuil, et
déterminer (1233) une longueur d'écran étendue de l'écran d'affichage en utilisant la première longueur étendue lorsque l'information d'entraînement de moteur est indisponible.

2. Dispositif électronique (100, 200, 400) selon la revendication 1, dans lequel l'aimant est disposé pour être mobile le long d'un axe tandis que le boîtier (210, 220, 410, 420) se déplace pour changer la taille d'écran de l'écran d'affichage, et
l'un ou plusieurs capteurs à effet Hall (176, 450) comprennent une pluralité de capteurs à effet Hall (176, 450) espacés le long d'un axe parallèle à l'axe le long duquel l'aimant est mobile à l'intérieur du dispositif électronique (100, 200, 400).

3. Dispositif électronique (100, 200, 400) selon la revendication 1 ou 2, dans lequel les instructions, lorsqu'elles sont exécutées par le processeur, amènent en outre le dispositif électronique (100, 200, 400) à :
lorsqu'une estimation sur la base de l'information d'entraînement de moteur est indisponible, estimer la longueur d'écran étendue sur la base d'une correspondance entre l'information de force magnétique détectée et une information de force magnétique de référence pré-stockée.

4. Dispositif électronique (100, 200, 400) selon la revendication 1 ou 2, dans lequel les instructions, lorsqu'elles sont exécutées par le processeur, amènent en outre le dispositif électronique (100, 200, 400) à :
enregistrer une valeur de force magnétique pour chaque longueur d'écran étendue tandis que le boîtier (210, 220, 410, 420) se déplace pour changer la taille de l'écran d'affichage par l'entraînement rotatif du moteur (440),
lorsque la longueur d'écran étendue de l'écran d'affichage passe d'une longueur minimale à une longueur maximale par l'entraînement rotatif du moteur (440) sans arrêt, mettre à jour la valeur de force magnétique enregistrée pour chaque longueur d'écran étendue à l'information de force magnétique de référence ; et
estimer une longueur d'écran étendue correspondant à l'information de force magnétique détectée en utilisant l'information de force magnétique de référence après la mise à jour de l'information.

5. Dispositif électronique (100, 200, 400) selon la revendication 4, dans lequel les instructions, lorsqu'elles sont exécutées par le processeur, amènent en outre le dispositif électronique (100, 200, 400) à :
lorsqu'une différence de motif entre la valeur de force magnétique enregistrée et une information de force magnétique de référence précédente est supérieure ou égale à une différence de seuil, mettre à jour l'information de force magnétique de référence avec la valeur de force magnétique enregistrée.

6. Dispositif électronique (100, 200, 400) selon l'une quelconque des revendications 1 à 5, dans lequel les instructions, lorsqu'elles sont exécutées par le processeur, amènent en outre le dispositif électronique (100, 200, 400) à :
déterminer la longueur d'écran étendue sur la base d'un nombre de rotations du moteur (440) et d'une longueur de transfert par rotation unitaire inclus dans l'information d'entraînement de moteur.

7. Dispositif électronique (100, 200, 400) selon l'une quelconque des revendications 1 à 6, dans lequel les instructions, lorsqu'elles sont exécutées par le processeur, amènent en outre le dispositif électronique (100, 200, 400) à :
lorsqu'un changement de la longueur est arrêté par une force externe avant qu'une longueur de l'écran d'affichage ne soit changée en une longueur cible pendant l'entraînement rotatif, déterminer la longueur d'écran étendue sur la base d'une détection de blocage dans le moteur (440).

8. Dispositif électronique (100, 200, 400) selon l'une quelconque des revendications 1 à 7, dans lequel les instructions, lorsqu'elles sont exécutées par le processeur, amènent en outre le dispositif électronique (100, 200, 400) à :
lors du changement de l'écran d'affichage en une longueur cible, commencer l'entraînement rotatif du moteur (440) à une première vitesse de rotation ;
avant d'atteindre la longueur cible, changer une vitesse de rotation pour l'entraînement rotatif en une seconde vitesse de rotation différente de la première vitesse de rotation ; et
estimer une longueur changée pendant l'entraînement rotatif à la première vitesse de rotation sur la base de l'information d'entraînement de moteur, et estimer une longueur changée pendant l'entraînement rotatif à la seconde vitesse de rotation sur la base de l'information de force magnétique détectée.

9. Dispositif électronique (100, 200, 400) selon la revendication 8, dans lequel les instructions, lorsqu'elles sont exécutées par le processeur, amènent en outre le dispositif électronique (100, 200, 400) à :
réduire la vitesse de rotation du moteur (440) à la seconde vitesse de rotation inférieure à la première vitesse de rotation pendant le mouvement du boîtier (210, 220, 410, 420) pour changer une longueur de l'écran d'affichage.

10. Dispositif électronique (100, 200, 400) selon l'une quelconque des revendications 1 à 9, dans lequel les instructions, lorsqu'elles sont exécutées par le processeur, amènent en outre le dispositif électronique (100, 200, 400) à :
lors de l'entraînement du dispositif électronique (100, 200, 400), déterminer, comme longueur initiale, la longueur d'écran étendue déterminée sur la base de l'information de force magnétique détectée.

11. Dispositif électronique (100, 200, 400) selon la revendication 10, dans lequel les instructions, lorsqu'elles sont exécutées par le processeur, amènent en outre le dispositif électronique (100, 200, 400) à :
lorsque l'entraînement rotatif du moteur (440) se produit, déterminer une longueur changée supplémentairement en fonction de la longueur initiale sur la base de l'information d'entraînement de moteur.

12. Dispositif électronique (100, 200, 400) selon la revendication 10, dans lequel les instructions, lorsqu'elles sont exécutées par le processeur, amènent en outre le dispositif électronique (100, 200, 400) à :
calculer une longueur rétractable qui est rétractable de la longueur initiale à une longueur minimale, et une longueur extensible qui est extensible de la longueur initiale à une longueur maximale.

13. Dispositif électronique (100, 200, 400) selon la revendication 12, dans lequel les instructions, lorsqu'elles sont exécutées par le processeur, amènent en outre le dispositif électronique (100, 200, 400) à :
limiter une plage du nombre de rotations du moteur (440) sur la base d'au moins l'une de la longueur rétractable ou de la longueur extensible.

14. Procédé de mise en œuvre par un processeur, comprenant :
effectuer (1010) l'une des opérations d'augmentation d'une taille d'un écran d'affichage visible d'un côté d'un module d'affichage et de réduction de la taille de l'écran d'affichage, en déplaçant un boîtier (210, 220, 410, 420) connecté au module d'affichage par un entraînement rotatif d'un moteur (440) ;
détecter (1020), par un ou plusieurs capteurs à effet Hall (176, 450), une force magnétique exercée par un aimant se déplaçant en réponse à un changement de la taille de l'écran d'affichage en fonction du mouvement du boîtier (210, 220, 410, 420) par l'entraînement rotatif ;
déterminer (1030) une première longueur étendue de l'écran d'affichage sur la base d'une information de force magnétique détectée qui est générée par la détection de force magnétique effectuée à l'aide de l'un ou plusieurs capteurs à effet Hall (176, 450) ;
déterminer (1030) une seconde longueur étendue de l'écran d'affichage sur la base d'une information d'entraînement de moteur sur la base de l'entraînement rotatif du moteur (440) ;
détecter une erreur entre la première longueur étendue et la seconde longueur étendue ;
changer un signal électrique à appliquer au moteur (440) afin de changer un couple de rotation du moteur (440) sur la base de la première longueur étendue et de la seconde longueur étendue lors de la détection de l'erreur ;
déterminer (1231) que l'information d'entraînement de moteur est indisponible lorsque l'erreur détectée est supérieure ou égale à une erreur de seuil ; et
déterminer (1233) une longueur d'écran étendue de l'écran d'affichage en utilisant la première longueur étendue lorsque l'information d'entraînement de moteur est indisponible.

15. Support non transitoire de stockage lisible par ordinateur stockant des instructions qui, lorsqu'elles sont exécutées sur un processeur, amènent le processeur à mettre en œuvre le procédé selon la revendication 14.
